(19) Europäisches Patentamt
European Patent Office
Office européen des brevets

(11) EP 2 421 910 B1

(12) **EUROPÄISCHE PATENTSCHRIFT**

(45) Veröffentlichungstag und Bekanntmachung des Hinweises auf die Patenterteilung:
**15.06.2016 Patentblatt 2016/24**

(21) Anmeldenummer: **10710572.8**

(22) Anmeldetag: **19.03.2010**

(51) Int Cl.:
***C08G 77/388*** *(2006.01)* ***C08L 83/08*** *(2006.01)*
***C09D 183/08*** *(2006.01)*

(86) Internationale Anmeldenummer:
**PCT/EP2010/053622**

(87) Internationale Veröffentlichungsnummer:
**WO 2010/121872 (28.10.2010 Gazette 2010/43)**

(54) **WÄSSRIGE SILANSYSTEME BASIEREND AUF TRIS(ALKOXYSILYLALKYL)AMINEN UND DEREN VERWENDUNG**

AQUEOUS SILANE SYSTEMS BASED ON TRIS(ALKOXYSILYLALKYL)AMINES AND THE USE THEREOF

SYSTÈMES DE SILANE AQUEUX À BASE DE TRIS(ALCOXYSILYLALKYL)AMINES ET LEUR UTILISATION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **20.04.2009 DE 102009017822**

(43) Veröffentlichungstag der Anmeldung:
**29.02.2012 Patentblatt 2012/09**

(73) Patentinhaber: **Evonik Degussa GmbH**
**45128 Essen (DE)**

(72) Erfinder:
- **ALBERT, Philipp**
  **79539 Lörrach (DE)**
- **JUST, Eckhard**
  **79618 Rheinfelden (DE)**

(56) Entgegenhaltungen:
**DE-A1- 10 335 178**
**US-A- 2 832 754**
**US-A1- 2008 081 120**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft eine wässrige Zusammensetzung basierend auf tris-silylierten aminofunktionellen Siliciumverbindungen, die im Wesentlichen frei von organischen Lösungsmitteln ist und auch beim Vernetzen im Wesentlichen keinen Alkohol mehr freisetzt sowie Verfahren zu deren Herstellung als auch deren Verwendung, beispielsweise zur Hydrophobierung von Metall-, Glas- oder mineralischen Oberflächen, wie Beton und Ziegelsteinen, als Haftvermittler, als Primer sowie auch unter anderem zur Gesteinsverfestigung .

Zunehmendes Interesse finden wässrige Silansysteme, die weniger bzw. keine organischen Lösungsmittel enthalten und deshalb umweltfreundlicher sind. Häufig sind diese wässrigen Systeme jedoch nicht über einen längeren Zeitraum beständig.

Die Herstellung von wasserlöslichen Aminopolysiloxanen wird in EP 0 590 270 A2 beschrieben. Die Aminosilane werden in einer 50 %igen alkoholischen Lösung mit einer definierten Wassermenge versetzt und anhydrolysiert. Nachteilig sind der hohe Gehalt an organischen Lösungsmitteln und der damit einhergehende niedrige Flammpunkt. Die Härtung einer verdünnten wässrigen Polysiloxanmischung erfolgt bei 80 °C.

DE 103 35 178 A1 offenbart die Herstellung von wasserverdünnbaren Silansystemen, z. B. einer Mischung aus 3-Aminopropyltrialkoxysilan und Bis(trialkoxysilylpropyl)amin in alkoholischen Lösemitteln. Diese Silanmischung wird mit einer definierten molaren Wassermenge partiell hydrolysiert. Die Silanmischung ist mit einem Alkoholgehalt von 25 bis 99,99 % nicht VOC frei (volatile organic compound).

In US 5 051 129 wird eine Zusammensetzung einer wässrigen Lösung eines wasserlöslichen Aminosilans und eines Alkyltrialkoxysilans offenbart. Die Herstellung erfolgt durch Zugabe einer definierten Menge Wasser zur Silanmischung und anschließender Temperierung bei 60 °C. Die so hergestellte Silanmischung wird in einem bestimmten Verhältnis in Wasser gelöst und dient zur Hydrophobierung von Oberflächen.

EP 0 716 128 A1 offenbart wasserbasierte Organopolysiloxan enthaltende Zusammensetzungen, Verfahren zu deren Herstellung als auch deren Verwendung. Durch Mischen von wasserlöslichen Aminoalkylalkoxysilanen mit Alkyltrialkoxysilanen und/oder Dialkyldialkoxysilanen und Zugabe von Wasser bei einem definierten pH-Wert entstehen Organopolysiloxan enthaltende Zusammensetzungen.

Wässrige Silansysteme bestehend aus Reaktionsprodukten der Umsetzung von Aminoalkyltrialkoxysilanen und Bis-Silylaminosilanen offenbart EP 1 031 593 A2. Diese wässrigen Lösungen, basierend auf der alleinigen Hydrolyse von Bis-Silylaminosilanen, sollen nicht applikationsfähig sein, da sie zum Gelieren und Ausflocken neigen.

In WO 00/39177 A2 wird die Anwendung von Bis-Silylaminosilanen und/oder Bis-Silylpolysulfanen in wässrigen, alkoholhaltigen Lösungen beschrieben. Die Silane werden mit Wasser, einem Alkohol und optional Essigsäure gemischt und mindestens 24 h hydrolysiert. Anschließend erfolgt die Anwendung auf Metallen.

US 6,955,728 B1 beschreibt die Anwendung von Acetoxysilanen in Kombination mit anderen Silanen in wässrigen Lösungen und deren Anwendung auf Metallen. Zum Verkauf werden unhydrolysierte Konzentrate in Form eines 2-komponentigen Systems bzw. ein wasserfreies, vorgemischtes Konzentrat empfohlen, um eine Kondensation der Silane zu unterbinden. Die wässrigen Lösungen enthalten nach dem Vermischen immer den Hydrolysealkohol.

DE 1008703 betrifft ein Verfahren zum Überziehen oder Schlichten von Glasfasern. Dazu wird ein Aminoalkoxysilan auf den Glasfaserstoff aufgebracht. Dies geschieht beispielsweise aus einer alkoholischen Lösung mit einem Wassergehalt von 0 bis 60 Gew.-%.

WO 2005/014741 A1 betrifft wässrig-alkoholische Formulierungen basierend auf Reaktionsprodukten von Aminosilanen, die in geringen Mengen auch Tris(trialkoxysilylpropyl)amine enthalten. Die genannten Formulierungen weisen einen Alkoholgehalt von 25 bis 99 Gew.-% auf und eignen sich zur Modifizierung von Glasfasern.

Aufgabe der vorliegenden Erfindung war es, wässrige und im Wesentlichen VOC-freie und/oder Sol-Gel basierte Zusammensetzungen auf Basis von tris-silylierten aminofunktionellen Alkoxysilanen bereitzustellen, die vielfältig einsetzbar sind, insbesondere vor Korrosion schützende und primernde Eigenschaften aufweisen und auch bei niedrigen Temperaturen vernetzen sowie weitgehend abrasionsresistent sind. Ein besonderes Anliegen bestand in der Bereitstellung daraus herstellbarer Schichten und Produkte.

Gelöst wird die Aufgabe gemäß den unabhängigen Patentansprüchen, bevorzugte Ausführungsformen sind in den Unteransprüchen und in der Beschreibung detailliert dargelegt.

Überraschend wurde gefunden, dass stabile wässrige, im Wesentlichen alkoholfreie Zusammensetzungen basierend auf Siliciumverbindungen aus tris-aminofunktionellen Alkoxysilanen, insbesondere der Formel IX, mit organofunktionellen, insbesondere mit alkylfunktionellen Alkoxysilanen, bevorzugt der Formel VI, erhalten werden können, wobei die Siliciumverbindungen im Wesentlichen vollständig hydrolysiert vorliegen. Zudem ist hervorzuheben, dass diese Zusammensetzungen vorteilhaft bereits bei niedrigen Temperaturen vernetzen.

So wurde erfindungsgemäß gefunden, dass aus Tris(triethoxysilylpropyl)amin (Tris-AMEO) stabile, im Wesentlichen VOC-freie wässrige Silansysteme, im Folgenden auch als Zusammensetzung bezeichnet, hergestellt werden können, die über besondere Eigenschaften verfügen. So zeigt beispielsweise ein wässriges Co-Kondensat aus Tris-AMEO und n-Propyltrimethoxysilan (PTMO) beim Auftragen auf eine Glasplatte, Metalloberfläche oder eine andere

geeignete Substratoberfläche nach dem Trocknen bei Raumtemperatur eine hohe Festigkeit und Hydrophobie. Im Vergleich zu Co-Kondensaten auf Basis von Bis(triethoxysilylpropyl)amin (Bis-AMEO) oder andere Silansysteme, beispielsweise basierend auf Aminosilanen oder reinen Alkylsilanen, erfolgt die Härtung von auf Tris-AMEO basierenden Silansystemen erheblich schneller, was für die verschiedensten Anwendungen, insbesondere für die Beschichtung von Substraten, besonders vorteilhaft ist. Darüber hinaus sind die erhaltenen Beschichtungen erheblich stabiler gegenüber aggressiven chemischen Einflüssen, wie kochendem Wasser, sauren Umgebungseinflüssen, Senf oder auch üblichen Reinigungsflüssigkeiten.

Überraschenderweise lösen sich die über 12 Stunden bei Raumtemperatur auf einer Metall- oder Glasoberfläche gehärteten erfindungsgemäßen Zusammensetzungen nicht im kochenden Wasser ab. Die erhaltene, gehärtete Schicht bleibt im Wesentlichen unverändert auf dem Substrat. Selbst gegenüber Essigreiniger, Senf und Backofenreiniger zeigt sich die nach 12 Stunden bei Raumtemperatur erhaltene, gehärtete Beschichtung beständig. Es wird angenommen, dass dies auf die mögliche stärkere Vernetzung mit dem Substrat zurückgeführt werden könnte, ohne an diese Theorie gebunden zu sein.

Als Vernetzen wird die Kondensation der Siliciumverbindungen untereinander, und insbesondere die Kondensation mit Funktionalitäten von Substraten verstanden. Hierdurch, und gegebenenfalls durch Wechselwirkungen oder Reaktionen, wie beispielsweise eine Komplexbildung, der Aminofunktionen der Siliciumverbindungen mit Funktionalitäten von Substraten, bilden sich stabile, Kochwasser beständige Schichten aus der wässrigen im Wesentlichen alkoholfreien Zusammensetzung aus.

Gegenstand der Erfindung ist ein Verfahren zur Herstellung einer Zusammensetzung enthaltend im Wesentlichen wasserlösliche, tris-silylierte aminofunktionelle und im Wesentlichen alkoxygruppenfreie Siliciumverbindungen, Wasser und gegebenenfalls eine Säure nach einem der Ansprüche 1 bis 5 sowie Zusammensetzungen erhältlich nach einem solchen Verfahren.

Gegenstand der Erfindung ist eine Zusammensetzung, im Weiteren auch Silansystem genannt, enthaltend im Wesentlichen wasserlösliche, tris-silylierte aminofunktionelle Siliciumverbindungen und Wasser, insbesondere als Sol-Gel-System oder auch als Lösung, wobei die Siliciumverbindungen aus Alkoxysilanen abgeleitet sind, vgl. dazu auch die nachfolgend aufgeführten Alkoxysilane bzw. Organoalkoxysilane, insbesondere gemäß den allgemeinen Formeln II, IX, IV, VI, VII sowie VIII, und vernetzende Strukturelemente, insbesondere mit den Resten A, Z, Y, C, D und/oder E sowie mit $R^1$, $R^3$, $R^5$, $R^7$, $R^8$, $R^{11}$ und/oder $R^{12}$, wie nachstehend definiert, aufweisen, die kettenförmige, cyclische, vernetzte und/oder raumvernetzte Strukturen bilden, wobei die Zusammensetzung gemäß dem erfindungsgemäßen Verfahren erhältlich ist.

Eine Struktur einer tris-silylierten aminofunktionellen Siliciumverbindung ist in idealisierter Form als allgemeine Formel I oder Ia dargestellt,

$$(R^1O)[(Y)_{2-\Delta}(R^{11})_\Delta Si(A)Si(R^{11})_\Delta(Y)_{2-\Delta}O]_a[(Y)_{2-\Omega}(R^{12})_\Omega SiZ]\underset{\substack{|\\ [ZSi(R^{12})_\Omega(Y)_{3-\Omega}]}}{N}[ZSi(R^{12})_\Omega(Y)_{2-\Omega}O]_\Sigma R^1 \bullet (HX)_e$$

wobei in den aus Alkoxysilanen abgeleiteten Strukturelementen

- A einem bivalenten Aminoalkyl-Rest,
- Z im tris-silylierten Amin unabhängig voneinander einem bivalenten Alkenyl-Rest,
- Y entspricht $OR^1$ oder in vernetzten und/oder raumvernetzten Strukturen unabhängig voneinander $OR^1$ oder $O_{1/2}$,
- wobei $R^1$, insbesondere in der Formel Ia, unabhängig voneinander im Wesentlichen Wasserstoff und $R^{11}$ und/oder $R^{12}$ unabhängig voneinander organofunktionellen Resten entsprechen und
- HX eine Säure darstellt, wobei X ein anorganischer oder organischer Säure-Rest ist,
- mit $0 \leq \Delta \leq 2$; $0 \leq \Omega \leq 2$; $a \geq 0$, vorzugsweise 1 bis 12 000, besonders bevorzugt 2 bis 10 000, ganz besonders bevorzugt 3 bis 5 000, $\Sigma \geq 1$, vorzugsweise 2 bis 15 000, besonders bevorzugt 3 bis 10 000, ganz besonders bevorzugt 4 bis 6 000, $e \geq 0$, vorzugsweise 1 bis hin zur Anzahl an N-Atomen im jeweiligen Molekül, besonders bevorzugt 2 bis 10 000, ganz besonders bevorzugt 3 bis 8 000, insbesondere 4 bis 5 000, und $(a+\Sigma+e) \geq 1$, insbesondere im Mittel für $(a+\Sigma) \geq 2$ bis 27 000 einschließlich aller dazwischen liegenden Zahlen.

Wobei die Zusammensetzung im Wesentlichen frei von organischen Lösemitteln ist und beim Vernetzen, insbesondere beim Aushärten, im Wesentlichen keinen Alkohol mehr freisetzt.

Gegenstand der Erfindung ist auch eine Zusammensetzung, im Weiteren auch Silansystem genannt, enthaltend im Wesentlichen wasserlösliche, tris-silylierte aminofunktionelle Siliciumverbindungen, die im Wesentlichen alkoxygruppenfrei sind und mindestens eine der Aminogruppen in der Siliciumverbindung tris-silyliert ist, und Wasser, insbesondere

als Sol-Gel-System oder auch als Lösung.

Unter vorliegenden, so genannten tris-silylierten aminofunktionellen Siliciumverbindungen sind - auch anders ausgedrückt - Aminoverbindungen zu verstehen, wobei in einem Molekül mindestens eine Aminogruppe vorliegt, die drei am Stickstoff gebundene Silylgruppen aufweist. Dabei ist die betreffende Silylgruppe in der Regel über eine bivalente Alkyleinheit, beispielsweise $-CH_2-$, $-(CH_2)_2-$,$-(CH_2)_3-$, $-CH_2[CH(CH_3)]CH_2-$, an den besagten Stickstoff gebunden. Darüber hinaus können besagte Silylgruppen unabhängig von einander gleich oder verschieden sein und neben "Si-OH"- und/oder "Si-O-Si"-Einheiten gegebenenfalls weitere Funktionalitäten aufweisen, insbesondere Organofunktionalitäten wie sie den nachfolgenden allgemeinen Formeln I, Ia, II, IX, IV, VII und VIII zu entnehmen sind, vgl. dazu auch Schema I. Als eine besagte, im Wesentlichen wasserlösliche, tris-silylierte aminofunktionelle, insbesondere alkoxygruppenfreie, Siliciumverbindung wird somit eine Verbindung verstanden, die durch Hydroylse- und/oder Kondensation, insbesondere zumindest partielle Kondensation, eines tris-silylierten aminofunktionellen Alkoxysilans, insbesondere der Formel IX, dessen Hydrolyse- und/oder Kondensationsprodukten unter Hydrolyse- und/oder Kondensationsbedingungen erhältlich ist, wobei die Herstellung in einer wässrig-alkoholischen Phase und die Lagerung in einer im wesentlichen wässrigen Phase erfolgen kann. Bevorzugt wird bei pH-Werten zwischen 1 bis 6 hydrolysiert und gelagert.

Gleichfalls wird als eine im Wesentlichen wasserlösliche, tris-silylierte aminofunktionelle, insbesondere alkoxygruppenfreie, Siliciumverbindung eine Verbindung verstanden, die durch Hydroylse- und/oder Kondensation, insbesondere zumindest partielle Kondensation, eines tris-silylierten aminofunktionellen Alkoxysilans, insbesondere der Formel IX, dessen Hydrolyse- und/oder Kondensationsprodukten mit weiteren funktionellen Alkoxysilanen, insbesondere der Formeln II, III, IV, VI, VII und/oder VIII, deren Hydrolyse- und/oder Kondensationsprodukten oder Mischungen daraus, unter Hydrolyse- und/oder Kondensationsbedingungen erhältlich ist, wobei die Herstellung in einer wässrig-alkoholischen Phase und die Lagerung in einer im wesentlichen wässrigen Phase erfolgen kann. Bevorzugt wird bei pH-Werten zwischen 1 bis 6 hydrolysiert und gelagert.

Beispielsweise lassen sich solche Co-Kondensate herstellen aus Tris-AMEO/Tris-AMMO und PTMO oder mit GLYMO oder aus Tris-AMEO/Tris-AMMO und AMEO, Bis-AMEO, MEMO, VTMO, VTEO, Dynasylan® 1189, Mercaptoalkylsilan, DAMO, TRIAMO, Dynasylan® 4144, Dynasylan A, alkyltrialkoxysilane, Bis(trialkoxysilylalkyl)polysulfane (bspw. Si69), Bis(trialkoxysilylalkyl)disulfane (bspw. Si 266)

Erfindungsgemäß ist das Sol-Gel mittelbar oder unmittelbar durch Hydrolyse- und/oder Kondensation eines tris-silylierten Aminoalkoxysilans der Formel IX und/oder eines Hydrolyse- und/oder Kondensates dieser Verbindung, gegebenenfalls mit weiteren funktionellen Alkoxysilanen, wie insbesondere der Formeln II, III, IV, VI, VII und/oder VIII oder mindestens zwei der genannten Alkoxysilane, deren Hydrolyse- und/oder Ankondensationsprodukte und/oder Co-Kondensate oder auch Block-co-Kondensate abgeleitet. Als mittelbar abgeleitet wird ein Sol-Gel System verstanden, das durch Reaktion von tris-aminofunktionellen Alkoxysilanen mit Siliciumdioxid ($SiO_2$) hergestellt wird und als unmittelbar, wenn sich das Sol-Gel-System, insbesondere ausschließlich, durch Kondensation der zugesetzten Alkoxysilane bildet.

Unter einer Lösung wird vorliegend eine homogene Mischung der Siliciumverbindung(en) und der im Wesentlichen wässrigen Phase der Zusammensetzung verstanden.

Der Gehalt an Lösemitteln, insbesondere an freiem Alkohol, in Bezug zur gesamten Zusammensetzung liegt bevorzugt unter 2 Gew.-%, insbesondere bei kleiner gleich $\leq$ 1 Gew.-%, besonders bevorzugt bei kleiner gleich 0,4 Gew.-%, vorzugsweise bei kleiner gleich 0,3 Gew.-%. Dabei ist es besonders zu bevorzugen, dass insbesondere beim Aushärten bzw. der Kondensation kleiner gleich $\leq$ 1 Gew.-% Alkohol, bevorzugt kleiner gleich 0,5 Gew.-% aus der tris-silylierten aminofunktionellen Siliciumverbindung, insbesondere der Formel Ia oder I mit $OR^1$, wobei $R^1$ einem Alkyl-Rest mit 1 bis 4 C-Atomen entspricht, freisetzt; bevorzugt liegt die trissilylierte aminofunktionelle Siliciumverbindung, insbesondere der Formel Ia und/oder I, im Wesentlichen vollständig hydrolysiert und zumindest partiell kondensiert, cokondensiert oder als Block-co-Kondensat vor; besonders bevorzugt ist der Gehalt an freien Alkoholen kleiner gleich 1 Gew.-%, bevorzugt kleiner gleich 0,5 Gew.-%, insbesondere, wenn das Reaktionsprodukt aus der Umsetzung von Silanen der Formeln II, IX oder IV oder mindestens zwei der genannten Verbindungen hervorgeht. Gleichfalls hervorzuheben ist der erreichbare Flammpunkt von über 95 °C. Als Lösemittel gelten Alkohole, wie Methanol, Ethanol, Propanol, Butanol, oder auch organische dem Fachmann bekannte übliche Lösemittel, wie Kohlenwasserstoffe, Ketone oder Ether.

Gegenstand der Erfindung sind auch Zusammensetzungen umfassend im Wesentlichen wasserlösliche und alkoxygruppenfreie Reaktionsprodukte aus der Hydrolyse und/oder Kondensation von Verbindungen der Formeln IX oder IX und II oder IX und IV oder IX, II und IV sowie deren Hydrolyse- und/oder Kondensationsprodukten sowie gegebenenfalls eine Säure bzw. deren konjugierten Salze und Wasser sowie gegebenenfalls Alkohol, wobei insbesondere der Gehalt an freiem Alkohol unter 1 Gew.-% in Bezug auf die Zusammensetzung beträgt.

Als im Wesentlichen alkoxygruppenfrei und frei von organischen Lösemitteln, wie Alkohol, gilt eine Zusammensetzung mit einem Verhältnis von Siliciumatomen in der Siliciumverbindung zu freiem Alkohol ($HOR^1$, mit $R^1$ gleich Alkylrest) bzw. AlkoxyGruppen in der Siliciumverbindung ($-OR^1$ mit $R^1$ gleich Alkylrest), insbesondere in den allgemeinen Formeln Ia oder I, mit kleiner 1 : 0,3, bevorzugt 1 : $\leq$ 0,15; besonders bevorzugt 1 : $\leq$ 0,05, ganz besonders bevorzugt 1 : $\leq$ 0,01, insbesondere von 1 : 0,001 bis 1 : 0,0001.

Entsprechendes gilt auch für Reaktionsprodukte basierend auf der Umsetzung von Silanen der Formel IX mit Verbindungen der Formeln II, IV, IX, VI, VII und/oder VIII.

Auf eine Glasplatte, Metalloberfläche oder andere Substratoberflächen aufgetragen, vernetzt die Kondensate oder Co-Kondensate enthaltende Zusammensetzung schnell mit dem Substrat und bildet eine hydrophobe Schicht hoher Festigkeit aus. So lösen sich die bei Raumtemperatur vernetzten Silansysteme auch in kochendem Wasser nicht wieder von der Glas- oder Metalloberfläche ab.

Auch Silansysteme basierend auf Co-Kondensaten aus tris-aminofunktionellen Alkoxysilanen, wie Tris(triethoxysilan)amin bzw. Tris(trimethoxysilan)amin, mit Alkoxysilanen bzw. Organoalkoxysilansystemen aus der Reihe n-Propyltriethoxysilan, n-Propyltrimethoxysilan (PTMO), 3-Glycidoxypropyltriethoxysilan (GLYEO) 3-Glycidoxypropyltrimethoxysilan (GLYMO), 3-Aminopropyltriethoxysilan (AMEO), 3-Aminopropyltrimethoxysilan (AMMO), Methacryloxypropyltriethoxysilan (MEEO), Methacryloxypropyltrimethoxysilan (MEMO), N-(n-Butyl)-3-aminopropyltriethoxysian, Vinyltrimethoxysilan (VTMO), N-(n-Butyl)-3-aminopropyltrimethoxysian (Dynasylan® 1189), 3-Mercaptopropyltrimethoxysilan (MTMO), 3-Mercaptopropyltrietoxysilan (MTEO), N-2-Aminoethyl-3-Aminopropyltrimethoxysilane (DAMO), Polyethylenglycolfunktionalisierte Alkoxysilane, Tetraethoxysilan (Dynasylan A), Tetramethoxysilan (Dynasylan M), Methyltriethoxysilan (MTES), Methyltrimethoxysilan (MTMS), Bis(triethoxysilylpropyl)tetrasulfan (Si 69), Bis(triethoxysilylpropyl)disulfan (Si 266), Bis(trimethoxysilylpropyl)disulfan Bis(trimethoxysilylpropyl)tetrasulfan, Vinyltriethoxysilan (VTEO), 1-Aminomethyltriethoxysilyn, 1-Aminomethyltrimethoxysilyn, 1-Methacryloxy-methyltrimethoxysilan 1-Methacryloxymethyltriethoxysilan, 1-Mercaptomethyl-triethoxysilan, 1-Mercaptomethyltrimethoxysilan, Isobutyltrimethoxysilan, Isobutyltriethoxysilan, Octyltriethoxysilan (Dynasylan® OTEO), Octyltrimethoxysilan, Hexadecyltriethoxysilan, Hexadecyltrimethoxysilan, Phenyltrimethoxysilan, Phenyltriethoxysilan, 2-Aminoethyl-3-aminopropyl-methyldimethoxysilane, 2-Aminoethyl-3-aminopropylmethyldiethoxysilane, Ureidopropyltrimethoxysilan, Ureidopropyltriethoxysilan, Tridecafluorooctyltriethoxysilan, Tridecafluorooctyl-trimethoxysilan, Organoalkoxysilylalkylbernsteinsäureanhydrid, wie Triethoxysilylpropylbernsteinsäureanhydrid, Trimethoxysilylpropylbernsteinsäureanhydrid, Methyldiethoxysilylpropylbernsteinsäureanhydrid, Methyldimethoxysilylpropylbernsteinsäureanhydrid, Dimethyethoxysilylpropylbernsteinsäureanhydrid, Dimethylmethoxysilylpropylbernsteinsäureanhydrid, - um nur einige Beispiele zu nennen -, Dynasylan® 1151 (alkoholfreies Aminosilanhydrolysat), Dynasylan® HS 2627 (alkoholfreies Co-Kondensat aus Aminosilan und Alkylsilan), Dynasylan® HS 2776 (wässriges, alkoholfreies Co-Kondensat aus Diaminosilan und Alkylsilan), Dynasylan® HS 2909 (wässriges, alkoholfreies Co-Kondensat aus Aminosilan und Alkylsilan), Dynasylan® HS 2926 (wässriges, alkoholfreies Produkt basierend auf Epoxysilan), Dynasylan® SIVO 110 (wässriges, alkoholfreies Produkt aus Epoxysilan), Bis(triethoxysilan)amin und/oder Bis(trimethoxysilan)amin weisen diese hohe Festigkeit auf einer Substratschicht auf.

Von besonderer Relevanz ist es, dass die Hydrophobie und Reaktivität der gehärteten Oberfläche durch die spezielle Kombination der besagten Silane gezielt eingestellt werden kann. Voraussetzung ist jedoch immer das Vorliegen mindestens einer tris-aminofunktionellen Verbindung bzw. dessen Hydrolyse- und/oder Kondensationsprodukten in der im Wesentlichen lösemittelfreien Zusammensetzung, wie beispielsweise von Tris(trialkoxysilan)amin, um die niedrige Härtungstemperatur zu erhalten. Daher härten selbst wässrige Silansysteme auf Basis anders substituierter Alkoxysilane bei niedrigen Temperaturen aus, sofern als weitere Komponente eine tris-aminofunktionelle Verbindung vorliegt. Selbst durch Co-Kondensation mit Fluorsilanen sind wässrige Silansysteme herstellbar, die bei Raumtemperatur härten, d. h. insbesondere mit den reaktiven Funktionalitäten der Substratoberfläche vernetzen und/oder Wechselwirkungen oder Reaktionen eingehen, und stabile oleophobe Oberflächen bilden.

Gemäß einer besonders bevorzugten Alternative ist auch Gegenstand der Erfindung eine Zusammensetzung, die im Wesentlichen wasserlösliche, tris-silylierte aminofunktionelle Siliciumverbindungen und Wasser enthält, insbesondere als Sol-Gel-System oder Lösung, wobei die Siliciumverbindungen aus Alkoxysilanen abgeleitet sind und vernetzende Strukturelemente aufweisen, die kettenförmige, cyclische, vernetzte und/oder raumvernetzte Strukturen bilden, wobei die Zusammensetzung gemäß dem erfindungsgemäßen Verfahren erhältlich ist.

Eine Struktur einer tris-silylierten aminofunktionellen Siliciumverbindung ist in idealisierter Form als allgemeine Formel I dargestellt

$$(R^1O)[(R^1O)_{1-x}(R^3)_xSi(B)O]_b[Si(C)(R^5)_y(OR^1)_{1-y}O]_c[(Y)_{2-\Delta}(R^{11})_\Delta Si(A)Si(R^{11})_\Delta(Y)_{2-\Delta}O]_a$$

$$[(Y)_{2-\Omega}(R^{12})_\Omega SiZ]\underset{\underset{[ZSi(R^{12})_\Omega(Y)_{3-\Omega}]}{|}}{N}[ZSi(R^{12})_\Omega(Y)_{2-\Omega}O]_\Sigma[Si(D)(R^7)_u(OR^1)_{1-u}O]_d[Si(E)(R^8)_v(OR^1)_{1-v}O]_wR^1 \bullet (HX)_e$$

(I)

wobei in den aus Alkoxysilanen abgeleiteten Strukturelementen

- A einem bivalenten Aminoalkyl-Rest,
- B einem Aminoalkyl-Rest,
- C einem Alkyl-Rest,
- D einem Epoxy- oder Ether-Rest und
- E einem organofunktionellen Rest entsprechen,
- Z in tris-silylierten Amin unabhängig voneinander einem bivalenten Alkylen-Rest,
- Y entspricht $OR^1$ oder in vernetzten und/oder raumvernetzten Strukturen unabhängig voneinander $OR^1$ oder $O_{1/2}$,
- wobei $R^1$ unabhängig voneinander im Wesentlichen Wasserstoff und $R^3$, $R^5$, $R^7$, $R^8$, $R^{11}$ und/oder $R^{12}$ unabhängig voneinander organofunktionellen Resten entsprechen und
- HX eine Säure darstellt, wobei X ein anorganischer oder organischer Säure-Rest ist,
- mit $0 \leq \Delta \leq 2$, $0 \leq \Omega \leq 2$; $0 \leq x \leq 1$, $0 \leq y \leq 1$, $0 \leq u \leq 1$, $0 \leq v \leq 1$, $a \geq 0$, $b \geq 0$, $c \geq 0$, $d \geq 0$, $w \geq 0$, $\Sigma \geq 1$, $e \geq 0$ und $(a+b+c+d+w+\Sigma+e) \geq 2$.

Wobei die Zusammensetzung im Wesentlichen frei von organischen Lösemitteln ist und beim Vernetzen im Wesentlichen keinen Alkohol mehr freisetzt, insbesondere liegen die Siliciumverbindungen im Wesentlichen vollständig hydrolysiert und zumindest partiell kondensiert, co-kondensiert oder partiell als Block-co-Kondensat vor. Bevorzugt sind die tris-silylierten Siliciumverbindungen im Wesentlichen daher alkoxygruppenfrei.

Die aus Alkoxysilanen, insbesondere der Formeln II, IX, IV, VI, VII und/oder VIII, abgeleiteten Reaktionsprodukte, weisen als vernetzte Strukturelemente der Siliciumverbindungen vorzugsweise die Reste A, B, D, E, Z, Y, $R^1$, $R^3$, $R^5$, $R^7$, $R^8$, $R^{11}$ und/oder $R^{12}$ auf.

Besonders bevorzugt sind Siliciumverbindungen, die idealisiert über die allgemeine Formel I und/oder Ia dargestellt werden, mit $c \geq 1$ und $\Sigma \geq 1$ oder $d \geq 1$ und $\Sigma \geq 1$ oder $w \geq 1$ und $\Sigma \geq 1$ und jeweils mit $a \geq 0$, $b \geq 0$, $e \geq 0$. Somit sind Siliciumverbindungen bevorzugt, die als Reaktionsprodukt aus Alkoxysilanen, Hydrolyse- und/oder Kondensationsprodukten der Formeln IX und VI oder IX und VII oder IX und VII sowie gegebenenfalls jeweils mit den Formel II und/oder III hergestellt werden oder erhältlich sind. Dabei kann insbesondere $\Delta = 0$, 1 oder 2, $\Omega = 0$, 1 oder 2; x = 0 oder 1, y=0 oder 1, u=0 oder1, v=0 oder1, a=0,1,2 bis $\infty$, b=0,1,2 bis $\infty$, c=0, 1,2 bis $\infty$, d=0, 1,2 bis $\infty$, w=0, 1,2 bis $\infty$, $\Sigma$=0,1,2 bis $\infty$ und e=0, 1, 2 bis $\infty$ sein mit $(a+b+c+d+w+\Sigma+e) \geq 2$.

In einer besonders bevorzugten Zusammensetzung ist $c \geq 1$ für das C, einen Alkyl-Rest, enthaltende Strukturelement, insbesondere bei einem pH-Wert kleiner 12, bevorzugt mit einem pH-Wert zwischen 3,5 bis 6. Alternativ kann $d \geq 1$ für das D, einen Epoxy- oder Ether-Rest, enthaltende Strukturelement sein. Gemäß einer weiteren bevorzugten Alternative kann $w \geq 1$ für E, einen organofunktionellen Rest, wie einen fluorierten Alkyl- oder einen Alkoxy-Rest, enthaltende Strukturelement sein, wobei der pH-Wert in der Zusammensetzung vorzugsweise kleiner 12, insbesondere zwischen 3,5 und 6 liegt.

Die erfindungsgemäßen Zusammensetzungen weisen einen pH-Wert unter 12 auf, insbesondere zwischen 1 und 12, vorzugsweise zwischen 1 und 9, bevorzugt zwischen 1 bis 5,4, besonders bevorzugt zwischen 3,0 und 5,4, insbesondere jedoch zwischen pH 3,5 bis 4,8. Der pH-Wert ist eine kritische Größe und hat in Abhängigkeit von der genauen Zusammensetzung der Siliciumverbindungen einen großen Einfluss auf die Wasserlöslichkeit und die Stabilität der Zusammensetzung.

Als Säuren zur Herstellung der Zusammensetzung oder auch zur Einstellung des pH-Wertes des Endproduktes kommen übliche, dem Fachmann geläufige organische oder anorganische Säuren in Betracht. Dies sind insbesondere wasserlösliche Säuren, wie Ameisensäure, Essigsäure, Zitronensäure, ein saures Kieselsol, Eisessig, Salpetersäure, Schwefelsäure und/oder Phosphorsäure.

Gemäß einer Ausführungsform ist es möglich, durch Verwendung der erfindungsgemäßen, wässrigen, im Wesentlichen lösungsmittelfreien tris-aminofunktionellen Siliciumverbindungen enthaltenden Zusammensetzung zusammen in Mischungen mit weiteren Silansystemen, die Produkteigenschaften dieser Silansysteme positiv zu modifizieren. Beispielsweise kann die Härtungstemperatur dieser Silansysteme ohne nachteiligen Einfluss auf die Performance gesenkt werden.

Weiterhin können unhydrolysierte Silane den erfindungsgemäßen Zusammensetzungen zugesetzt werden. Dies kann beispielsweise unmittelbar vor der Das Anwendungsspektrum der erfindungsgemäßen wässrigen Silansysteme ist sehr vielseitig, so können sie als Hydrophobierungsmittel auf unterschiedlichsten Substraten, wie z. B. Glas oder Beton, Ziegelstein, Sandstein etc., eingesetzt werden. In der Kombination mit Fluorsilanen - als Co-Kondensat oder Mischung - können zudem Substrate mit zusätzlich oleophoben und Anti-Graffiti- und/oder Anti-Fingerprint-Eigenschaften erhalten werden. Weitere Anwendungsgebiete ergeben sich in der Primerung von Substratoberflächen, wie beispielsweise Glas, Metall, Beton, Sandstein, Ziegelstein und weitere anorganische Substrate etc. Durch die Primerung von z. B. Metalloberflächen wird die Haftung der Deckschicht, beispielsweise - aber nicht ausschließlich für 1 K- sowie 2K-Flüssiglacke oder Pulverlacke, und damit auch ein verbesserter Korrosionsschutz erzielt. Des Weiteren können die wässrigen Silansysteme auf Basis von tris-aminofunktionellen Silanverbindungen auch zur Gesteinsverfestigung oder in wässrigen Lack-Formulierungen, Lack-Dispersionen oder generell in Dispersionen eingesetzt werden.

Ebenfalls können erfindungsgemäße Silansysteme als solche oder in Formulierungen für Anwendungen genutzt

werde, bei denen auch eine biozide, fungizide und/oder viruzide Wirkung gewünscht ist, beispielsweise für die Beschichtung bzw. Oberflächenbehandlung medizinischer Geräte oder Instrumente.

Die erfindungsgemäßen Zusammensetzungen basieren auf wasserlöslichen, tris-silylierten aminofunktionellen Siliciumverbindungen, die aus mindestens einem oder mehreren Alkoxysilanen abgeleitet sind, wie mono- oder difunktionalisierten Alkoxysilanen oder Tetraalkoxysilanen, wobei die Siliciumverbindungen vernetzende Strukturelemente aufweisen, insbesondere in den über das erfindungsgemäße Verfahren hergestellten oder erhältlichen Siliciumverbindungen, wobei

- A in dem Strukturelement einem bivalenten Aminoalkyl-Rest, abgeleitet aus der allgemeinen Formeln II, entspricht,

$$(OR^1)_{3-\Delta}(R^{11})_\Delta Si - A - Si(R^{11})_\Delta(OR^1)_{3-\Delta} \qquad (II)$$

mit A für eine bivalente aminofunktionelle Gruppe der Formel III

$$-Z^*-[NH(CH_2)_f]gNH[(CH_2)_{f^*}NH]_{g^*}-Z^*- \qquad (III)$$

worin Z* unabhängig einem bivalenten Alkylen-Rest, insbesondere $-(CH_2)_i-$ oder ein Strukturisomer, bevorzugt $-CH_2-$, $-((CH_2)_2-$, $-(CH_2)_3-$, oder $-[CH_2CH(CH_3)CH_2]-$, darstellt und worin i, f, f*, g oder g* gleich oder verschieden sind, mit i = 0 bis 8, f und/oder f* = 1, 2 oder 3, g und/oder g* = 0, 1 oder 2, $R^{11}$ ein linearer, verzweigter und/oder cyclischer Alkyl-Rest mit 1 bis 24 C-Atomen ist, insbesondere 1 bis 16 C-Atome, bevorzugt 1 bis 8 C-Atome, besonders bevorzugt 1 bis 4 C-Atome, oder ein Aryl-Rest ist, mit $\Delta = 0$ oder 1, wobei i bevorzugt 0, 1, 2, 3 oder 4 ist,

- Z im tris-silylierten Amin-Strukturelement unabhängig einem bivalenten Alkylen-Rest, abgeleitet aus der allgemeinen Formel IX, entspricht

$$N[ZSi(R^{12})_\Omega(OR^1)_{3-\Omega}]_3 \qquad (IX)$$

wobei Z unabhängig ein bivalenter Alkylen-Rest ist, insbesondere aus der Reihe $-CH_2-$, $-(CH_2)_2-$, $-(CH_2)_3-$ oder $-[CH_2CH(CH_3)CH_2]-$, $R^{12}$ ein linearer, verzweigter und/oder cyclischer Alkyl-Rest mit 1 bis 24 C-Atomen ist, insbesondere 1 bis 16 C-Atome, bevorzugt 1 bis 8 C-Atome, besonders bevorzugt 1 bis 4 C-Atome , oder ein Aryl-Rest ist und unabhängig $\Omega = 0$ oder 1 ist,

- B in dem Strukturelement einem aminofunktionellen Rest, abgeleitet aus der allgemeinen Formel IV, entspricht

$$B-Si(R^3)_x(OR^1)_{3-x} \qquad (IV)$$

mit x = 0 oder 1, wobei $R^3$ einem linearen, verzweigten oder cyclischen Alkyl-Rest mit 1 bis 24 C Atomen, insbesondere 1 bis 16 C-Atome, bevorzugt 1 bis 8 C-Atome, besonders bevorzugt 1 bis 4 C-Atome, und/oder substituierten oder unsubstituierten Aryl-Rest, Arylalkyl-Rest und
B einer der folgenden aminofunktionellen Gruppen der allgemeinen Formel Va oder Vb entspricht

$$R^{10}_{h^*}NH_{(2-h^*)}[(CH_2)_h(NH)]_j\,[(CH_2)_l(NH)]_n\,-(CH_2)_k- \qquad (Va)$$

worin $0 \leq h \leq 6$; h* = 0, 1 oder 2, j = 0, 1 oder 2; $0 \leq l \leq 6$; n = 0, 1 oder 2; $0 \leq k \leq 6$ und $R^{10}$ einem Benzyl-, Aryl-, Vinyl-, Formyl-Rest und/oder einem linearen, verzweigten und/oder cyclischen Alkyl-Rest mit 1 bis 8 C-Atomen entsprechen, bevorzugt sind k = 3, n = 1 oder 2, l = 1, 2 oder 3 und j = 0, besonders bevorzugt sind k = 3, n = 1 oder 2, l = 2 und j = 0; m = 2 und p = 3 für einen N,N-Di(2-aminoethyl)-3-aminopropyl-Rest, und/oder

$$[NH_2(CH_2)_m]_2N(CH_2)_p- \qquad (Vb)$$

wobei $0 \leq m \leq 6$ und $0 \leq p \leq 6$ sind,

- C in dem Strukturelement einem Alkyl-Rest, abgeleitet aus der allgemeinen Formel VI, entspricht

$$C-Si(R^5)_y(OR^1)_{3-y} \qquad (VI)$$

mit y = 0 oder 1, wobei C einem linearen, verzweigten oder cyclischen Alkyl-Rest mit 1 bis 20 C-Atomen, $R^5$ einem linearen, verzweigten oder cyclischen Alkyl-Rest mit 1 bis 24 C Atomen, insbesondere 1 bis 16 C-Atome, bevorzugt

1 bis 8 C-Atome, besonders bevorzugt 1 bis 4 C-Atome, und/oder substituierten oder unsubstituierten Aryl-Rest oder Arylalkyl-Rest entsprechen,

- D in dem Strukturelement einem Epoxy- oder Ether-Rest, abgeleitet aus der allgemeinen Formel VII, entspricht

$$D\text{-}Si(R^7)_u(OR^1)_{3-u} \qquad (VII),$$

mit u = 0 oder 1, wobei D einem 3-Glycidoxyalkyl-, 3-Glycidoxypropyl-, Epoxyalkyl-, Epoxycycloalkyl-, Polyalkylglykolalkyl-Rest oder einem Polyalkylglykol-3-propyl-Rest, $R^7$ einem linearen, verzweigten und/oder cyclischen Alkyl-Rest mit 1 bis 24 C-Atomen, insbesondere 1 bis 16 C-Atome, bevorzugt 1 bis 8 C-Atome, besonders bevorzugt 1 bis 4 C-Atome, oder einem Aryl-Rest entsprechen und/oder,

- E in dem Strukturelement einem organofunktionellen Rest, abgeleitet aus der allgemeinen Formel VIII, entspricht

$$E\text{-}Si(R^8)_v(OR^1)_{3-v} \qquad (VIII),$$

mit v = 0 oder 1, wobei $R^8$ einem linearen, verzweigten oder cyclischen Alkyl-Rest mit 1 bis 24 C-Atomen, insbesondere 1 bis 16 C-Atome, bevorzugt 1 bis 8 C-Atome, besonders bevorzugt 1 bis 4 C-Atome,

  - E einem Rest $R^{8*}\text{-}Y_m\text{-}(CH_2)_s\text{-}$, wobei $R^{8*}$ einem mono-, oligo- oder perfluorierten Alkyl-Rest mit 1 bis 9 C-Atomen oder einem mono-, oligo- oder perfluorierten Aryl-Rest, wobei ferner Y einem $CH_2$-, O-, Aryl- oder S-Rest entspricht und m = 0 oder 1 und s = 0 oder 2 ist und/oder
  - E einem Vinyl-, Allyl-, Isopropenyl-Rest, Mercaptoalkyl-Rest, Sulfanalkyl-Rest, Ureidoalkyl-Rest, einem Acryloxyalkyl-Rest oder einem linearen, verzweigten oder cyclischen Alkoxy-Rest mit 1 bis 24 C-Atomen, insbesondere mit 1 bis 16 C-Atomen, bevorzugt mit 1 bis 4 C-Atomen, und

- $R^1$ jeweils unabhängig voneinander in II, IX, IV, VI, VII und/oder VIII einem linearen, cyclischen und/oder verzweigten Alkyl-Rest mit 1 bis 24 C-Atomen, insbesondere 1 bis 16 C-Atomen, bevorzugt 1 bis 8 C-Atomen, besonders bevorzugt 1 bis 4 C-Atomen, entspricht. Üblicherweise ist $R^1$ ein Methyl-, Ethyl- oder Propyl-Rest.

Bevorzugt verwendbare Verbindungen der Formel IX sind:

Tris(trialkoxysilylalkyl)amin, Tris-N,N'-(trialkoxysilylalkyl)alkylendiamin und/oder Tris-N,N'-(trialkoxysilylalkyl)dialkylentriamin, insbesondere von Tris(triethoxysilylpropyl)-amin ($N[(CH_2)_3Si(OC_2H_5)_3]_3$, Tris-AMEO), Tris(trimethoxysilylpropyl)amin ($N[(CH_2)_3Si(OCH_3)_3]_3$, Tris-AMMO), Tris-DAMO ($N[(CH_2)_2NH(CH_2)_3Si(OCH_3)_3]_3$ und/oder Tris-TRIAMO ($N[(CH_2)_2NH(CH_2)_2NH(CH_2)_3Si(OCH_3)_3]_3$), wobei Tris-AMEO und Tris-AMMO besonders bevorzugt sind.

Bevorzugt verwendbare Bis-Aminoalkoxysilanverbindungen der Formel II sind: Bis(trialkoxysilylalkyl)amin, Bis-N,N'-(trialkoxysilylalkyl)alkylendiamin und/oder Bis-N,N'-(trialkoxysilylalkyl)dialkylentriamin, insbesondere von Bis(triethoxysilylpropyl)-amin ($(H_5C_2O)_3Si(CH_2)_3NH(CH_2)_3Si(OC_2H_5)_3$, Bis-AMEO), Bis(trimethoxysilylpropyl)-amin ($(H_3CO)_3Si(CH_2)_3NH(CH_2)_3Si(OCH_3)_3$, Bis-AMMO), Bis-DAMO ($(H_3CO)_3Si(CH_2)_3NH(CH_2)_2NH(CH_2)_3Si(OCH_3)_3$) und/oder Bis-TRIAMO ($(H_3CO)_3Si(CH_2)_3NH(CH_2)_2NH(CH_2)_2NH(CH_2)_3Si(OCH_3)_3$), Bis(diethoxymethylsilylpropyl)amin, Bis(dimethoxymethylsilylpropyl)amin, Bis(triethoxysilylmethyl)amin, Bis(trimethoxysilylmethyl)amin, Bis(diethoxymethylsilylmethyl)amin, Bis(dimethoxymethylsilylmethyl)amin, $(H_3CO)_2(CH_3)Si(CH_2)_3NH(CH_2)_2NH(CH_2)_3Si(OCH_3)_2(CH_3)$ und/oder $(H_3CO)_3(CH_3)Si(CH_2)_3NH(CH_2)_2NH(CH_2)_2NH(CH_2)_3Si(OCH_3)_2(CH_3)$, wobei Bis(triethoxysilylpropyl)amin($(H_5C_2O)_3Si(CH_2)_3NH(CH_2)_3Si(OC_2H_5)_3$, Bis-AMEO) besonders bevorzugt ist.

Bevorzugt verwendbare Aminoalkoxyverbindungen der Formel IV sind: Aminopropyltrimethoxysilan ($H_2N(CH_2)_3Si(OCH_3)_3$, AMMO), Aminopropyltriethoxysilan ($H_2N(CH_2)_3Si(OC_2H_5)_3$, AMEO), Diaminoethylen-3-propyltrimethoxysilan ($H_2N(CH_2)_2NH(CH_2)_3Si(OCH_3)_3$,DAMO);Triaminodiethylen-3-propyltrimethoxysilan ($H_2N(CH_2)_2NH(CH_2)_2NH(CH_2)_3Si(OCH_3)_3$ (TRIAMO), Aminopropylmethyldiethoxy-silan, Aminopropylmethyldimethoxysilan, 2-Aminoethyl-trimethoxysilan, 2-Aminoethyl-methyl-dimethoxysilan, 2-Aminoethyl-phenyl-dimethoxysilan, 2-Aminoethyltriethoxysilan, 2-Aminoethyl-methyl-diethoxysilan, 2-Aminoethyl-triethoxysilan, (2-Aminoethylamino)-ethyltriethoxysilan, 6-Amino-n-hexyl-triethoxysilan, 6-Amino-n-hexyl-trimethoxysilan, 6-Amino-n-hexyl-methyl-dimethoxysilan sowie insbesondere 3-Amino-n-propyl-trimethoxysilan, 3-Amino-n-propyl-methyl-dimethoxysilan, 3-Amino-n-propyltriethoxysilan, 3-Amino-n-propyl-methyl-diethoxysilan, 1-Aminomethyltri-ethoxysilan, 1-Aminomethylmethyldiethoxysilan, 1-Aminomethyltrimethoxysilan, 1-Aminomethylmethyldiethoxysilan, N-Butyl-3-aminopropyltriethoxysilan, N-Butyl-3-aminopropylmethyldiethoxysilan, N-Butyl-3-aminopropyltrimethoxysilan, N-Butyl-3-aminopropylmethyldimethoxysilan, N-Butyl-1-amino-methyltriethoxysilan, N-Butyl-1-aminomethylmethyldimethoxysilan, N-Butyl-1-aminomethyltrimethoxysilan, N-Butyl-1-aminomethylmethyltriethoxysilan, N-Cyclohexyl-1-aminomethylmethyltriethoxysilan, N-Cyclohexyl-1-aminomethylmethyltrimethoxysilan, N-Phenyl-1-aminomethylmethyltriethoxysilan, N-Phenyl-1-aminomethylmethyltrimethoxysilan, N-Formyl-3-aminopropyltriethoxysilan, N-Formyl-3-aminopropyltrimethoxysilan, N-Formyl-1-aminomethylmethyldimethoxysilan und/oder N-Formyl-1-aminomethylmethyldiethoxysilan oder deren Gemische.

Bevorzugt verwendbare Alkylalkoxysilanverbindungen der Formel VI sind: Verbindungen der Formel VI mit y = 0 oder 1, wobei C einem linearen oder verzweigten Alkyl-Rest mit 1 bis 24 C-Atomen, insbesondere mit 1 bis 8 C-Atomen, bevorzugt einem Methyl-, Ethyl, besonders bevorzugt n-Propyl-, iso-Propyl- oder Octyl-Rest, $R^5$ einem linearen, verzweigten oder cyclischen Alkyl-Rest mit 1 bis 24 C-Atomen, insbesondere mit 1 bis 8 C-Atomen, bevorzugt einem Methyl-, Ethyl, besonders bevorzugt n-Propyl-, iso-Propyl- und/oder Octyl-Rest, $R^4$ einem linearen und/oder verzweigten Alkyl-Rest mit 1 bis 3 C-Atomen, besonders bevorzugt einem Methyl-, Ethyl- und/oder iso-Propyl- oder n-Propyl-Rest entsprechen. Bevorzugte beispielhaft genannte Alkoxysilanverbindungen sind: Propyltrimethoxysilan (PTMO), Dimethyldimethoxysilan (DMDMO), Dimethyldiethoxysilan, Methyltriethoxysilan (MTES), Propylmethyldimethoxysilan, Propylmethyldiethoxysilan, n-Octyl-methyl-dimethoxysilan, n-Hexyl-methyl-dimethoxysilan, n-Hexyl-methyl-diethoxysilan, Propyl-methyl-diethoxysilan, Propyl-methyl-diethoxysilan, Propytriethoxysilan, Isobutyltrimethoxysilan, Isobutyltriethoxysilan, Octyltrimethoxysilan, Octyltriethoxysilan, n-Hexyl-triethoxysilan, Cyclohexyl-triethoxysilan, n-Propyl-tri-n-butoxysilan, n-Propyl-trimethoxysilan, n-Propyl-triethoxysilan, Isobutyl-triethoxysilan, Hexadecyltriethoxysilan, Hexadecyltrimethoxysilan, Octadecyltriethoxysilan, Octadecyltrimethoxysilan, Octadecylmethyldiethoxysilan, Octadecylmethyldimethoxysilan, Hexadecylmethyldimethoxysilan und/oder Hexadecylmethyldiethoxysilan sowie Mischungen dieser Silane.

Bevorzugt verwendbare mit dem Rest D-funktionalisierte Alkoxysilanverbindungen der Formel VII sind Verbindungen, wie 3-Glycidoxypropyltrialkoxysilan, als Triethoxy- oder Trimethoxysilan; Epoxycyclohexyltrialkoxysilan, als Triethoxy- oder Trimethoxysilan.

Zweckmäßig ist der Rest D als Polyalkylglykol-Rest ausgewählt aus der Gruppe Polyethylenglykol-3-propyl (PEG-propyl), Polypropylenglykol-3-propyl, Polymethylenglykol-3-propyl oder aus Co-Polymeren mit Propylenglykol- und Ethylenglykolgruppen, beispielsweise mit statistischer Verteilung oder Blockpolymeren, wobei die Polyalkylenglykolgruppen vorzugsweise einen mittleren Verteilungsgrad von etwa 3 bis 14 Alkylenglykolgruppen je Molekül aufweisen.

Bevorzugt verwendbare organofunktionalisierte Alkoxysilanverbindungen der Formel VIII sind beispielsweise die folgenden Verbindungen: Gemäß einer bevorzugten Ausführungsform entspricht E einer $F_3C(CF_2)_r(CH_2)_s$ -Gruppe, wobei r eine ganze Zahl von 0 bis 9 darstellt, s gleich 0 oder 2 ist, besonders bevorzugt ist r gleich 5 und s gleich 2, $CF_3(CF_2)_5(CH_2)_2$- oder eine $CF_3(C_6H_4)$- oder eine $C_6F_5$-Gruppe. Gemäß einer weiteren Ausführungsform entspricht E einem Sulfanalkyl-Rest der allgemeinen Formel XI mit $-(CH_2)_q-X-(CH_2)_q-Si(R^8)_v(OR^1)_{3-v}$ (XI), wobei q = 1, 2 oder 3, X = $S_p$, wobei p im Mittel 2 bzw. 2,18 oder im Mittel 4 bzw. 3,8 mit einer Verteilung von 2 bis 12 Schwefelatomen in der Kette entspricht, und v, $R^8$ und $R^1$ wie vorstehend definiert sind. Die resultierenden Silane, in denen E der allgemeinen Formel XI entsprechen, können beispielsweise Bis(triethoxysilylpropyl)disulfan (Si 266), Bis(trimethoxysilylpropyl)disulfan, Bis(triethoxysilylpropyl)tetrasulfan (Si 69), Bis(trimethoxysilylpropyl)terasulfan, Bis(triethoxysilylmethyl)disulfan, Bis(trimethoxysilylmethyl)disulfan, Bis(triethoxysilylpropyl)disulfan, Bis(diethoxymethylsilylpropyl)disulfan, Bis(dimethoxymethylsilylpropyl)disulfan, Bis(dimethoxymethylsilylmethyl)disulfan, Bis(diethoxymethylsilylmethyl)disulfan, Bis(diethoxymethylsilylpropyl)tetrasulfan, Bis(dimethoxymethylsilylpropyl)tetrasulfan, Bis(dimethoxymethylsilylmethyl)-tetrasulfan, Bis(diethoxymethylsilylmethyl)tetrasulfan, 3-Mercaptopropyltrimethoxysilan, 3-Mercaptopropyltriethoxysilan und/oder Gemische sein. Gemäß einer weiteren zweckmäßigen Ausführungsform entspricht E einem Methoxy-, Ethoxy-, iso-Propoxy oder n-Propoxy-Rest, wobei v = 0 ist, so dass die Verbindung der allgemeinen Formel VIII einem Tetraalkoxysilan entspricht. Übliche Tetraalkoxysilane sind Tetramethoxysilan oder Tetraethoxysilan.

Weitere besonders bevorzugte Alkoxysilanverbindungen der allgemeinen Formel VIII sind auch Tridecafluor-1,1,2,2-tetrahydrooctyl-1-trimethoxysilan, Tridecafluor-1,1,2,2-tetrahydrooctyl-1-triethoxysilan oder entsprechende Gemische enthaltend daraus abgeleitete Silane oder 3,3,3-Trifluorpropyl-trimethoxysilan, 3,3,3-Trifluorpropyl-methyl-dimethoxysilan, 3,3,3-Trifluorpropyl-methyl-dimethoxysilan, 3,3,3-Trifluor-propyl-cyclohexyl-dimethoxysilan, 3,3,3-Trifluorpropyl-phenyl-diethoxysilan, 3,3,3-Trifluorpropyl-triethoxysilan, 3,3,3,2,2-Pentafluorpropyl-methyl-dimethoxysilan, 3,3,3-Trifluorpropyloxyethyl-trimethoxysilan, 3,3,3-Trifluorpropylmerkaptoethyltrimethoxysilan, 3,3,3-Trifluorpropyloxyethyl-methyl-dimethoxysilan sowie insbesondere Tridecafluor-1,1,2,2-tetrahydrooctyl-trimethoxysilan und Tridecafluor-1,1,2,2-tetrahydrooctyl-triethoxysilan sowie Acryloxypropyltrialkoxysilan, Methyacryloxypropyltrialkoxysilan, wobei der Alkoxy-Rest sowohl durch Methoxy-, Ethoxy oder auch Propoxy-Reste ersetzbar ist. Geeignete Verbindungen sind ebenfalls Methacryloxymethyltriethoxysilan, Methacryloxymethyltrimethoxysilan, Methacryloxypropyl-methyldiethoxysilan, Methacryloxypropyl-methyldimethoxysilan, Methacryloxypropyl-methyldiethoxysilan, Methacryloxymethyl-methyldiethoxysilan und/oder Methacryloxymethyl-methyldimethoxysilan und/oder Mischungen.

Die Zusammensetzung ist bevorzugt im Wesentlichen frei von freiem Alkohol und die Siliciumverbindung ist im Wesentlichen frei von Alkoxygruppen, so dass bevorzugt das molare Verhältnis von Siliciumatomen in den Siliciumverbindungen zu Alkohol und Alkoxygruppen, oder $HOR^1$ und $-OR^1$, in der allgemeinen Formel I oder Ia, größer 1 : 0,1 ist, wobei zur Berechnung nur $R^1$ zu berücksichtigen sind, die nicht Wasserstoff entsprechen, also nur $R^1$, die unabhängig voneinander einem linearen, cyclischen und/oder verzweigten Alkyl-Rest, insbesondere mit 1 bis 4 C-Atomen entsprechen. Zweckmäßig ist bereits ein Verhältnis von 1 : 1, d.h. pro 1 Mol Si-Atome liegen weniger als 1 Mol Alkohol oder Alkoxygruppen vor, insbesondere ist das Verhältnis größer als 1 : 0,5, bevorzugt größer 1 : 0,05, vorzugsweise größer 1 : 0,01, besonders bevorzugt größer 1 : 0,005.

Die im Folgenden angegebenen Gehalte in Gewichtsprozent in der Zusammensetzung (Endprodukt) spiegeln den Anteil der eingesetzten Alkoxysilanverbindung(en) vor der erfindungsgemäßen Umsetzung und Entfernen des Hydrolysealkohols aus dem Reaktionsgemisch wider.

Bevorzugt beträgt der Gehalt in Gewichtsprozent, angegeben als Anteil der eingesetzten Alkoxysilanverbindung(en), in der Zusammensetzung 0,1 bis 99,9 Gew.-%, insbesondere 1 bis 80 Gew.-%, 5 bis 60 Gew.-%, bevorzugt 5 bis 50 Gew.-%, besonders bevorzugt 7,5 bis 40 Gew.-% in Bezug auf die gesamte Zusammensetzung, insbesondere bei einem pH-Wert kleiner 12, insbesondere zwischen 1 bis 6, vorzugsweise zwischen 1 bis 4,8, bevorzugt zwischen 3,5 bis 4,5. Generell kann jede Zusammensetzung auch auf einen Gehalt unter 1 Gew.-%, insbesondere auf 0,0001 bis 1 Gew.-% durch den Fachmann geläufige Maßnahmen eingestellt werden. Zu diesen Maßnahmen zählen Verdünnen vor und/oder nach der Herstellung oder auch kurz vor der Applikation. Als Verdünnungsmittel/-medium kommen übliche Medien, wie Wasser, Lösemittel oder auch Lacke oder Formulierungen aus dem pharmazeutischen, kosmetischen, Bau- oder auch Maschinenbaubereich in Frage. Die Verdünnung der Zusammensetzung kann beispielsweise kurz vor deren Verwendung als Zusammensetzung oder Mittel zur Behandlung und/oder Modifizierung von Substraten erfolgen. Dazu kann die wässrige Zusammensetzung, insbesondere mit einem Gehalt, bezogen auf die eingesetzten Alkoxysilane, von 0,1 bis 95,5 Gew.-% an Siliciumverbindungen, mit beispielsweise zu 1 : 0,5 bis 1 : 1000 mit Wasser oder einer wässrigen Phase verdünnt werfen. Übliche Verdünnungen liegen im Bereich von 1 : 1 bis 1 : 100, insbesondere zwischen 1 : 50, bevorzugt zwischen 1 : 1 bis 1: 10. Als Lösemittel können Alkohole, Ether, Ketone, Ester, Mischungen dieser Lösemittel oder generell dem Fachmann geläufige Lösemittel eingesetzt werden.

Erfindungsgemäße Zusammensetzungen vernetzen bereits ab 0 °C und vorzugsweise unterhalb 100 °C, insbesondere zwischen 15 bis 25 °C. Dem Fachmann ist klar, dass bei erhöhten Temperaturen beispielsweise bis hinauf auf 200 °C die Vernetzung oder Aushärtung schneller ablaufen kann. Bevorzugte Zusammensetzungen setzen weniger als 1 Gew.-% bis 0 Gew.-%, bevorzugt weniger als 0,4 Gew.-%, besonders bevorzugt unter 0,3 Gew.-% bis 0 Gew.-%, Alkohol in Bezug auf die Gesamtzusammensetzung beim Härten frei.

Eine Zusammensetzung wird als stabil angesehen, wenn sie über einen Zeitraum von wenigstens 2 Monaten, bevorzugt 6 Monate bei Raumtemperatur im verschlossenen Behältnis, besonders bevorzugt über 10 Monate bei Raumtemperatur (20 bis 25 °C) nicht trüb wird oder sich nicht verfestigt. Besonders stabile Zusammensetzungen sind über 12 Monate unter den genannten Bedingungen stabil. Alternativ können besonders stabile Zusammensetzungen eine Stabilität von bis zu 2 Monaten, insbesondere von 6 Monaten unter Stressbedingungen aufweisen. Unter Stressbedingung wird eine Lagerung im verschlossenen Behältnis bei 60 °C verstanden.

Die Einstellung des pH-Wertes der Zusammensetzung erfolgt in der Regel bereits bei ihrer Herstellung, so dass eine spätere Einstellung des pH-Wertes unterbleiben kann. Als Säuren zur Einstellung des pH-Werts, insbesondere als HX, wobei X ein anorganischer oder organischer Säure-Rest ist, kommen vorzugsweise Ameisensäure, Essigsäure, ein saures Kieselgel, ein saures Kieselsol, Eisessig, Salpetersäure, Schwefelsäure und/oder Phosphorsäure zum Einsatz. Als Kieselsole kommen insbesondere Levasil 100S als saures Kieselsol, aber auch gefällte Kieselsäure, dispergierte Kieselsäure in Betracht. Zudem sind dem Fachmann weitere übliche geeignete Säuren bekannt, die zur Hydrolyse- und/oder Kondensation und zur Einstellung des pH-Wertes der fertigen Zusammensetzung dienen können.

Wobei generell alle Zusammensetzungen besonders stabil sind, wenn der pH-Wert im Bereich zwischen 1,0 und 6, insbesondere 3,0 und 5,4, bevorzugt zwischen 3,0 und 4,8, besonders bevorzugt zwischen 3,5 bis 4,8 liegt. Zweckmäßig kann in den im Wesentlichen lösemittelfreien Zusammensetzungen, die auch beim Vernetzen im Wesentlichen keinen Alkohol mehr freisetzen der pH-Wert auch so eingestellt werden, dass die Siliciumverbindungen noch wasserlöslich und/oder stabil sind. In der Regel kann dies bis zu einem pH-Wert von etwa 6,0 oder auch knapp darüber gegeben sein.

Unter einem Strukturelement, einer monomeren Siloxan- oder Bis-Siloxan-Einheit, wird vorliegend die einzelne Baueinheit M, D, T oder Q verstanden, d. h. das alkoxysubstituierte Silan, das daraus gebildete hydrolysierte Silan und/oder das Kondensationsprodukt. Erfindungsgemäß bilden die Strukturelemente, insbesondere die folgenden Strukturelemente $N[ZSi(R^{12})_{\Omega}(Y)_{3-\Omega}]_3$, $N[ZSi(Y)_3]_3$, $[(R^1O)_{1-x}(R^1)_xSi(B)O]_b$, $(R^1O)[(R^1O)_{1-x}(R^3)_xSi(B)O]_b$, $[(R^1O)_{1-x}(R^1)_xSi(B)O]_b$, $[(R^1O)_1Si(B)O]_b$, $[(Y)_{2-\Delta}(R^{11})_{\Delta}Si(A)Si(R^{11})_{\Delta}(Y)_{2-\Delta}O]_a$, $[(Y)_2Si(A)Si\ (Y)_2O]_a$, $(Y)[(Y)_2Si(A)Si(Y)_2O]_a$, $[Si(C)(OR^1)_1O]_c$, $[Si(C)(R^5)_y(OR^1)_{1-y}O]_c$, $[Si(C)(R^5)_y(OR^1)_{1-y}O]R^1_c$, $[Si(D)(R^7)_u(OR^1)_{1-u}O]_d$, $[Si(D)(R^7)_u(OR^1)_{1-u}O]R^1_d$, $[Si(E)(R^8)_v(OR^1)_{1-v}O]_w$, $[Si(E)(OR^1)_1O]_w$, $[Si(Y)_2O]_w$ aus Tetraalkoxysilan, und/oder $[Si(E)(R^8)_v(OR^1)_{1-v}O]_wR^1$, kettenförmige, cyclische, vernetzte und/oder raumvemetzte Strukturen mit statistischer und/oder regelloser Verteilung der Strukturelemente und/oder Blockkondensate der Strukturelemente aus, siehe beispielsweise Schema I. Die allgemeinen Formeln Ia oder I geben nicht die tatsächlich vorliegende Struktur oder Zusammensetzung wieder. Sie entspricht einer idealisierten Darstellungsmöglichkeit. Die Zusammensetzung enthält bevorzugt Siliciumverbindungen, die durch statistische und/oder regellose Co-Hydrolyse und/oder Co-Kondensation und/oder Blockkondensation der genannten Strukturelemente, basierend auf den erfindungsgemäß mit Z, A, B, C, D oder E-Resten substituierten Alkoxysilanen, entstehen

und/oder sich unter den gewählten Versuchsbedingungen bilden.

Das Substitutionsmuster gilt entsprechend auch für die nicht in idealisierter Form dargestellten kettenförmigen, cyclischen, vernetzten und/oder raumvernetzten Silansysteme/Siliciumverbindungen, wobei Y einem $OR^1$ oder in vernetzten und/oder raumvernetzten Strukturen unabhängig voneinander $OR^1$ oder $O_{1/2}$ - in einer Siloxanbindung - entspricht, $R^1$ entspricht in den Siliciumverbindungen im Wesentlichen Wasserstoff, wobei in vernetzten und/oder raumvernetzten Strukturen auch aus den Resten $OR^1$ jeweils unabhängig voneinander Siloxanbindungen mit $O_{1/2}$ gebildet werden können bzw. diese Reste unabhängig voneinander als $O_{1/2}$ vorliegen können und $R^3$, $R^5$, $R^7$, $R^8$, $R^{11}$ und/oder $R^{12}$ entsprechen organofunktionellen Resten, Z im tri-silylierten Amin unabhängig einem bivalenten Alkylen-Rest, A einem Bis-Aminoalkyl-Rest, B einem Aminoalkyl-Rest, C einem Alkyl-Rest, D einem Epoxy- oder Ether-Rest und E einem organofunktionellen Rest. In Schema I sind beispielhaft, nicht abschließend, mögliche idealisierte Darstellungsvarianten der allgemeinen Formel Ia und I dargestellt.

Schema I:

Beispielhafte, nicht abschließend dargestellte, mögliche idealisierte Abbildungsvarianten der allgemeinen Formeln Ia oder I

$$(R^1O)[(R^1O)_{1-x}(R^3)_xSi(B)O]_b[Si(C)(R^5)_y(OR^1)_{1-y}O]_c[(Y)_{2-\Delta}(R^{11})_\Delta Si(A)Si(R^{11})_\Delta(Y)_{2-\Delta}O]_a[(Y)_{2-\Omega}(R^{12})_\Omega SiZ]N[ZSi(R^{12})_\Omega(Y)_{2-\Omega}O]_\Sigma[Si(D)(R^7)_u(OR^1)_{1-u}O]_d[Si(E)(R^8)_v(OR^1)_{1-v}O]_wR^1\bullet (HX)_e$$
$$|\ [ZSi(R^{12})_\Omega(Y)_{3-\Omega}]$$

$$(R^1O)[(R^1O)_{1-x}(R^3)_xSi(B)O]_b[(Y)_{2-\Delta}(R^{11})_\Delta Si(A)Si(R^{11})_\Delta(Y)_{2-\Delta}O]_a[(Y)_{2-\Omega}(R^{12})_\Omega SiZ]N[ZSi(R^{12})_\Omega(Y)_{2-\Omega}O]_\Sigma[Si(D)(R^7)_u(OR^1)_{1-u}O]_d[Si(E)(R^8)_v(OR^1)_{1-v}O]_wR^1\bullet (HX)_e$$
$$|\ [ZSi(R^{12})_\Omega(Y)_{3-\Omega}]$$

$$(R^1O)[Si(E)(R^8)_v(OR^1)_{1-v}O]_w[Si(C)(R^5)_y(OR^1)_{1-y}O]_c[(Y)_{2-\Delta}(R^{11})_\Delta Si(A)Si(R^{11})_\Delta(Y)_{2-\Delta}O]_a[(Y)_{2-\Omega}(R^{12})_\Omega SiZ]N[ZSi(R^{12})_\Omega(Y)_{2-\Omega}O]_\Sigma[Si(D)(R^7)_u(OR^1)_{1-u}O]_d[Si(E)(R^8)_v(OR^1)_{1-v}O]_wR^1\bullet (HX)_e$$
$$|\ [ZSi(R^{12})_\Omega(Y)_{3-\Omega}]$$

$$(R^1O)[(R^1O)_{1-x}(R^3)_xSi(B)O]_b[Si(C)(R^5)_y(OR^1)_{1-y}O]_c[(Y)_{2-\Delta}(R^{11})_\Delta Si(A)Si(R^{11})_\Delta(Y)_{2-\Delta}O]_a[(Y)_{2-\Omega}(R^{12})_\Omega SiZ]N[ZSi(R^{12})_\Omega(Y)_{2-\Omega}O]_\Sigma[Si(E)(R^8)_v(OR^1)_{1-v}O]_wR^1\bullet (HX)_e$$
$$|\ [ZSi(R^{12})_\Omega(Y)_{3-\Omega}]$$

$$(R^1O)[Si(C)(R^5)_y(OR^1)_{1-y}O]_c[(Y)_{2-\Omega}(R^{12})_\Omega SiZ]N[ZSi(R^{12})_\Omega(Y)_{2-\Omega}O]_\Sigma R^1\bullet (HX)_e$$
$$|\ [ZSi(R^{12})_\Omega(Y)_{3-\Omega}]$$

$$(R^1O)[(R^1O)_{1-x}(R^3)_xSi(B)O]_b[(Y)_{2-\Delta}(R^{11})_\Delta Si(A)Si(R^{11})_\Delta(Y)_{2-\Delta}O]_a[(Y)_{2-\Omega}(R^{12})_\Omega SiZ]N[ZSi(R^{12})_\Omega(Y)_{2-\Omega}O]_\Sigma[Si(E)(R^8)_v(OR^1)_{1-v}O]_wR^1\bullet (HX)_e$$
$$|\ [ZSi(R^{12})_\Omega(Y)_{3-\Omega}]$$

Als Zusammensetzung, die im Wesentlichen frei von organischen Lösungsmitteln ist, sollen Zusammensetzungen verstanden werden, die bis auf sehr geringe Gehalte keine organischen Lösungsmittel, insbesondere keine Alkohole, wie Methanol, Ethanol oder Propanol, mehr enthalten. Definitionsgemäß wurde auch der bei der Hydrolyse der Alkoxysilane gebildete Hydrolysealkohol aus diesen Zusammensetzungen nahezu vollständig entfernt. Als im Wesentlichen frei von organischen Lösungsmitteln, insbesondere frei von Alkoholen und/oder Alkoxy-Gruppen, d. h. es wird auch beim Vernetzen im Wesentlichen kein Alkohol mehr freigesetzt, gilt eine Zusammensetzung, wenn der Gehalt kleiner 5 Gew.-% bis 0 Gew.-%, insbesondere kleiner 4 Gew.-%, bevorzugt unter 2 Gew.-%, insbesondere unter 1 Gew.-%, besonders bevorzugt unter 0,4 Gew.-% oder unter 0,3 Gew.-% beträgt. Insbesondere beträgt der Gehalt der Siliciumverbindung 1 bis 50 Gew.-%, insbesondere 5 bis 60 Gew.-%, vorzugsweise 5 bis 50 Gew.-%, bevorzugt 5 bis 40 Gew.-%, besonders bevorzugt 7,5 bis 40 Gew.-%. Der Gehalt bezieht sich auf den Gehalt der eingesetzten Silane in der fertigen Zusammensetzung.

Erfindungsgemäße Zusammensetzungen enthaltend tris-aminofunktionelle Siliciumverbindungen enthalten mindestens ein tris-aminofunktionelles Strukturelement, basierend auf einem tris-aminofunktionellen Silan der Formel IX und vernetzen bei Temperaturen ab 0 °C, insbesondere ab 5 °C, bevorzugt zwischen 5 und 30 °C, besonders bevorzugt zwischen 15 und 25 °C. Zusammensetzungen mit hervorragenden Eigenschaften vernetzen zwischen 5 und 30 °C innerhalb von 24 Stunden, insbesondere innerhalb von 12 Stunden, bevorzugt innerhalb von 6 Stunden.

Offenbart wird eine tris-aminofunktionelle Zusammensetzungen enthalten mindestens ein tris-aminofunktionelles Strukturelement, basierend auf einem Tris(trialkoxysilan)amin, wobei die Zähler der Strukturelemente $\Sigma \geq 1$, $b \geq 0$, $a \geq 0$, $c \geq 0$, $d \geq 0$, $w \geq 0$ und $e \geq 1$, insbesondere in mindestens einer der Formeln I und/oder Ia, sind.

Bevorzugt sind aber generell Kombinationen von mindestens einem Tris(trialkoxysilylalkyl)amin, Tris-N,N'-(trialkoxysilylalkyl)alkylendiamin und/oder Tris-N,N'-(trialkoxysilylalkyl)dialkylentriamin, insbesondere von Tris(triethoxysilylpropyl)amin ($N[(CH_2)_3Si(OC_2H_5)_3]_3$, Tris-AMEO), Tris(trimethoxysilylpropyl)amin ($N[(CH_2)_3Si(OCH_3)_3]_3$, Tris-AMMO), Tris-DAMO ($N[(CH_2)_2NH(CH_2)_3Si(OCH_3)_3]_3$ und/oder Tris-TRIAMO ($N[(CH_2)_2NH(CH_2)_2NH(CH_2)_3Si(OCH_3)_3]_3$, wobei

Tris-AMEO und Tris-AMMO besonders bevorzugt sind, insbesondere mit einem Alkylalkoxysilan umgesetzt zu werden, insbesondere mit einem Silan der Formel VI mit $c \geq 1$, wie n-Propyltriethoxysilan (PTEO), n-Propyltrimethoxysilan (PTMO), Dimethyldimethoxysilan (DMDMO), Dimethyldiethoxysilan, n-Octyltrialkoxysilan, Isobutyltrimethoxysilan, Isobutyltriethoxysilan, Octyltriethoxysilan (Dynasylan® OCTEO), Octyltrimethoxysilan, Hexadecyltriethoxysilan, Hexadecyltrimethoxysilan, Phenyltrimethoxysilan, Phenyltriethoxysilan und/oder Methyltriethoxysilan, wobei die Silane sowohl Methoxy als auch Ethoxy substituiert sein können. Zweckmäßige Gewichtsverhältnisse, in denen die Edukte zueinander eingesetzt werden und dann auch entsprechend in der Zusammensetzung vorliegen, sind Tris-aminofunktionelles Silan zu alkylfunktionellem Silan von 3:1 bis 1:2.

Alternative im Wesentlichen lösemittelfreie Zusammensetzungen umfassen im Wesentlichen wasserlösliche, tris-aminofunktionelle Siliciumverbindungen, wobei der pH-Wert bevorzugt zwischen 1,0 und 6 liegt, insbesondere zwischen 3,0 und 6, insbesondere zwischen 3,5 und 6, besonders bevorzugt zwischen 3,5 und 5, vorzugsweise zwischen 3,5 und 5 liegt.

Die Zusammensetzungen können bevorzugt nur aus Wasser, Säure und den, aus den im Wesentlichen wasserlöslichen Alkoxysilanen der allgemeinen Formel IX, II, IV, VI, VII und/oder VIII abgeleiteten, Siliciumverbindungen und/oder deren im Wesentlichen vollständig hydrolysierten, wasserlöslichen Hydrolysaten und/oder Kondensations- oder Co-Kondensationsprodukten bestehen, und sind im Wesentlichen frei von organischen Lösungsmitteln. Bevorzugt liegt der pH-Wert dieser Zusammensetzungen zwischen 1 bis 6, insbesondere zwischen 2,0 und 5,4, bevorzugt zwischen 3,5 und 4,4. Weitere Zusätze zur Stabilisierung der Zusammensetzung sind in der Regel nicht notwendig.

Als Hilfsstoffe und als weitere Komponente können der Zusammensetzung nanoskalige Füllstoffe oder generell übliche Füllstoffe zugesetzt werden. Dies können auch neutrale oder basische Kieselsole oder Kieselgele sein. Auch Additive, wie Fließhilfsmittel oder beispielsweise Katalysatoren zur Modifizierung der Härtungsgeschwindigkeit, können der Zusammensetzung zugesetzt werden.

Die Erfindung betrifft auch ein Verfahren zur Herstellung einer Zusammensetzung enthaltend im Wesentlichen wasserlösliche, tris-silylierte aminofunktionelle und im Wesentlichen alkoxygruppenfreie Siliciumverbindungen, Wasser und gegebenenfalls eine Säure sowie insbesondere Zusammensetzungen erhältlich nach einem solchen Verfahren, indem

- mindestens ein tris-silyliertes Aminoalkoxysilan der Formel IX

$$N[ZSi(R^{12})_{\Omega}(OR^1)_{3-\Omega}]_3 \qquad (IX)$$

mit Z unabhängig für einen bivalenten Alkylen-Rest, insbesondere aus der Reihe $-CH_2-$, $-(CH_2)_2-$, $-(CH_2)_3-$, oder $-[CH_2CH(CH_3)CH_2]-$, $R^{12}$ einem linearen, verzweigten oder cyclischen Alkyl-Rest mit 1 bis 24 C-Atomen, insbesondere mit 1 bis 16 C-Atomen, bevorzugt mit 1 bis 8 C-Atomen, besonders bevorzugt mit 1 bis 4 C-Atomen, oder einem Aryl-Rest entspricht und worin unabhängig $\Omega$ = 0 oder 1 ist und/oder dessen Hydrolyse- und/oder Kondensationsprodukte und gegebenenfalls

- mindestens ein Bis-Aminoalkoxysilan der Formel II

$$(OR^1)_{3-\Delta}(R^{11})_{\Delta}Si - A - Si(R^{11})_{\Delta}(OR^1)_{3-\Delta} \qquad (II)$$

mit A für eine bis-aminofunktionelle Gruppe der Formel III

$$-(CH_2)_i-[NH(CH_2)_f]_gNH[(CH_2)_{f*}NH]g_*-(CH_2)_{i*}- \qquad (\mathbf{III})$$

worin i, i*, f, f*, g oder g* gleich oder verschieden sind, mit i und/oder i* = 0 bis 8, f und/oder f* = 1, 2 oder 3, g und/oder g* = 0, 1 oder 2, $R^{11}$ einem linearen, verzweigten oder cyclischen Alkyl-Rest mit 1 bis 24 C-Atomen, insbesondere mit 1 bis 16 C-Atomen, bevorzugt mit 1 bis 8 C-Atomen, besonders bevorzugt mit 1 bis 4 C-Atomen, oder einem Aryl-Rest entspricht, mit $\Delta$ = 0 oder 1 und/oder dessen Hydrolyse- und/oder Kondensationsprodukte und gegebenenfalls

- mindestens ein Aminoalkylalkoxysilan der Formel IV

$$B-Si(R^3)_x(OR^1)_{3-x} \qquad (IV)$$

mit x = 0 oder 1, wobei $R^3$ einem linearen, verzweigten oder cyclischen Alkyl-Rest mit 1 bis 24 C Atomen, insbesondere 1 bis 16 C-Atome, bevorzugt 1 bis 8 C-Atome, besonders bevorzugt 1 bis 4 C-Atome, wobei $R^1$ einem linearen, verzweigten und/oder cyclischen Alkyl-Rest mit 1 bis 24 C-Atomen, insbesondere mit 1 bis 4 C-Atomen, und B einer

der folgenden aminofunktionellen Gruppen der allgemeinen Formel Va oder Vb entspricht

$$R^{10}_{h^*}NH_{(2-h^*)}[(CH_2)_h(NH)]_j[(CH_2)_l(NH)]_n\text{-}(CH_2)_k\text{-} \quad (Va)$$

worin $0 \le d \le 6$; $h^* = 0$, 1 oder 2, $j = 0$, 1 oder 2; $0 \le l \le 6$; $n = 0$, 1 oder 2; $0 \le k \le 6$ und $R^{10}$ einem Benzyl-, Aryl-, Vinyl-, Formyl-Rest und/oder einem linearen, verzweigten und/oder cyclischen Alkyl-Rest mit 1 bis 8 C-Atomen entsprechen, und/oder

$$[NH_2(CH_2)_m]_2N(CH_2)_p\text{-} \quad (Vb)$$

wobei $0 \le m \le 6$ und $0 \le p \le 6$ sind und/oder dessen Hydrolyse- und/oder Kondensationsprodukte und gegebenenfalls

- mindestens ein Alkylalkoxysilan der allgemeinen Formel VI

$$C\text{-}Si(R^5)_y(OR^1)_{3-y} \quad (VI)$$

mit y = 0 oder 1, wobei C einem linearen, verzweigten oder cyclischen Alkyl-Rest mit 1 bis 20 C-Atomen, $R^5$ einem linearen, verzweigten oder cyclischen Alkyl-Rest mit 1 bis 24 C Atomen, insbesondere mit 1 bis 12 C-Atomen und/oder Aryl-Rest, $R^1$ einem linearen, verzweigten und/oder cyclischen Alkyl-Rest mit 1 bis 24 C-Atomen, insbesondere mit 1 bis 4 C-Atomen, entspricht und/oder dessen Hydrolyse- und/oder Kondensationsprodukte, und gegebenenfalls

- mindestens ein Epoxy- oder Ether-Alkoxysilan der allgemeinen Formel VII

$$D\text{-}Si(R^7)_u(OR^1)_{3-u} \quad (VII),$$

mit u = 0 oder 1, wobei D einem 3-Glycidoxyalkyl-, 3-Glycidoxypropyl-, Epoxyalkyl-, Epoxycycloalkyl-, Polyalkylglykolalkyl- oder einem Polyalkylglykol-3-propyl-Rest, $R^7$ einem linearen, verzweigten oder cyclischen Alkyl-Rest mit 1 bis 24 C-Atomen, insbesondere mit 1 bis 4 C-Atomen, und $R^1$ einem linearen, verzweigten und/oder cyclischen Alkyl-Rest mit 1 bis 24 C-Atomen, insbesondere mit 1 bis 4 C-Atomen oder Aryl-Rest entspricht und/oder dessen Hydrolyse- und/oder Kondensationsprodukte, und gegebenenfalls

- mindestens ein organofunktionelles Alkoxysilan der Formel VIII

$$E\text{-}Si(R^8)_v(OR^1)_{3-v} \quad (VIII),$$

mit v = 0 oder 1, wobei $R^8$ einem linearen, verzweigten oder cyclischen Alkyl-Rest mit 1 bis 24 C-Atomen, insbesondere mit 1 bis 4 C-Atomen, E einem Rest $R^{8*}\text{-}Y_m\text{-}(CH_2)_s\text{-}$, wobei $R^{8*}$ einem mono-, oligo- oder perfluorierten Alkyl-Rest mit 1 bis 9 C-Atomen oder einem mono-, oligo- oder perfluorierten Aryl-Rest, wobei ferner Y einem $CH_2$-, O-, Aryl- oder S-Rest entspricht und m = 0 oder 1 und s = 0 oder 2 sind, oder einem Vinyl-, Allyl-, Isopropenyl-Rest, Mercaptoalkyl-Rest, Sulfanalkyl-Rest, Ureidoalkyl-Rest, einem Acryloxyalkyl-Rest oder einem linearen, verzweigten oder cyclischen Alkoxy-Rest mit 1 bis 24 C-Atomen, insbesondere mit 1 bis 4 C-Atomen, und $R^1$ einem linearen, verzweigten und/oder cyclischen Alkyl-Rest mit 1 bis 4 C-Atomen entsprechen, dessen Hydrolyse- und/oder Kondensationsprodukte, und/oder gegebenenfalls

- mindestens eine Mischung aus zwei der vorgenannten Alkoxysilane, Hydrolyse- und/oder Kondensationsprodukte,

- und wobei $R^1$ unabhängig voneinander jeweils in den Formeln IX, II, IV, VI, VII und/oder VIII einem linearen, cyclischen und/oder verzweigten Alkyl-Rest mit 1 bis 24 C-Atomen, insbesondere mit 1 bis 12 C-Atomen, bevorzugt mit 1 bis 8 C-Atomen, besonders bevorzugt mit 1 bis 4 C-Atomen, wie Methyl, Ethyl, Propyl und/oder Butyl, entspricht;

- in Gegenwart von Wasser und gegebenenfalls in Gegenwart einer Säure, und gegebenenfalls unter Vorlage und/oder Zugabe von Alkohol und/oder eines Katalysators hydrolysiert werden und der Alkohol im Wesentlichen entfernt wird.

Insbesondere wird bei einer Temperatur unter 100 °C, insbesondere zwischen 50 und 70 °C, bevorzugt zwischen 55 und 70 °C gerührt.

Zur Herstellung der erfindungsgemäßen Zusammensetzungen wird einschließlich der Zugabe der Silane der Formeln IX, II, IV, VI, VII, und/oder VIII über einen definierten Zeitraum bei den genannten Temperaturen gerührt,

bevorzugt zwischen 40 und 240 Minuten, insbesondere zwischen 70 und 180 Minuten, bevorzugt um 90 bis 150 Minuten bei circa 60 bis 65 °C gerührt, und der Alkohol wird im Wesentlichen vollständig, insbesondere im nächsten Schritt, entfernt.

Die bevorzugt zu verwendenden Alkoxysilane sowie deren Substitutionsmuster, insbesondere der Formeln IX, II, IV, VI, VII und VIII, wurden vorstehend eingehend beschrieben und können entsprechend den dort offenbarten Substitutionsmuster in das Verfahren eingesetzt werden. Nach dem Entfernen des Alkohols kann die Zusammensetzung filtriert werden, um insbesondere Partikel oder Verunreinigungen mit einer Korngröße von über circa 20 μm abzutrennen.

Das erfindungsgemäße Verfahren kann so durchgeführt werden, dass die Silane der allgemeinen Formeln IX, II, IV, VI, VII und/oder VIII, deren Hydrolyse- und/oder Ankondensations- und/oder Kondensationsprodukte und/oder Mischungen dieser in wässriger und/oder alkoholischer Lösung zugegeben werden. Darüber hinaus können die Silane der allgemeinen Formeln IX, II, IV, VI, VII oder VIII und/oder deren Kondensationsprodukte nacheinander oder als Mischung zugegeben werden.

Das erfindungsgemäße Verfahren kann je nach gewünschtem Produkt in alternativen Verfahrensvarianten durchgeführt werden. Gemäß einer besonders bevorzugten Verfahrensführung wird Wasser und Säure vorgelegt, beispielsweise zu etwa 92 Gew.-% der Gesamtmischung nach Zugabe des Alkoxysilans (ad 100 Gew.-%) es wird zu etwa 8 Gew.-% das Alkoxysilan der allgemeinen Formel IX und gegebenenfalls zusätzlich der Formeln II, IV, VI, VII und/oder VIII zugesetzt. Der resultierende pH-Wert sollte zwischen 3,5 und 6 liegen. Einschließlich der Dosierzeit der Alkoxysilane wird üblicherweise über einen Zeitraum von 90 Minuten bei erhöhter Temperatur gerührt, insbesondere bei 55 bis 70 °C, bevorzugt zwischen 60 und 65 °C. Gegebenenfalls kann eine weitere Stunde bei einer Temperatur um 65 °C weitergerührt werden. Anschließend werden üblicherweise etwa 10 Gew.-% der Reaktionsmischung als Wasser/Alkohol-Gemisch abdestilliert. In der Regel wird eine Menge abdestilliert, die der Menge an Säure und zugesetztem Alkoxysilanen entspricht, so dass die verbleibende Gesamtmenge etwa der ursprünglichen Menge an vorgelegtem Wasser entsprechen kann. Sofern der verbleibende Alkoholgehalt zu hoch ist, kann erneut eine bestimmte Menge Wasser zugesetzt werden, wobei diese Menge anschließend als Wasser/Alkohol-Gemisch wieder abdestilliert werden kann.

Gemäß einer alternativen Verfahrensführung können Wasser und Säure vorgelegt werden und ein Silan, mindestens zwei Silane zeitlich versetzt, eine Mischung von Silanen, hydrolysierte- und/oder kondensierte Silane, beispielsweise als Oligomer, Co-Kondensate der Silane und/oder Block-Co-Kondensate zugesetzt werden.

So können ein tris-silyliertes Aminoalkylalkoxysilan der Formel IX und ein Alkylalkoxysilan der allgemeinen Formel VI in dem erfindungsgemäßen Verfahren miteinander umgesetzt werden oder ein tris-silyliertes Aminoalkylalkoxysilan der Formel IX und ein Alkylalkoxysilan der allgemeinen Formel VII oder ein tris-silyliertes Aminoalkylalkoxysilan der Formel IX und ein Alkylalkoxysilan der allgemeinen Formel VIII oder auch zusätzlich gegebenenfalls ein Alkoxysilan der Formel II und/oder IV.

Dem Fachmann ist klar, dass diese Aufzählung nur einige exemplarische Kombinationen nennt und nicht als abschließend zu verstehen ist.

Entsprechend einer erfindungsgemäßen alternativen Verfahrensführung wird Wasser und Säure einer definierten Menge vorgelegt, anschließend wird ein Alkoxysilan der Formel IX, II oder IV oder eine Mischung mindestens zwei der Silane zudosiert und über einen definierten Zeitraum, insbesondere inklusive der Dosierzeit über etwa 1 Stunde bei einer Temperatur um 60 °C gerührt. Der pH-Wert sollte nach der Zugabe der Silane unter pH 6, insbesondere bei etwa 3,5 bis 6, insbesondere um 4,3 liegen. Nachfolgend kann ein Alkoxysilan der Formel VI zudosiert werden. Alternativ kann auch ein Silan der Formel VI oder VII oder VIII oder Mischungen oder Co-Kondensate mindestens zwei der genannten Silane zugesetzt werden. Die erhaltene Reaktionsmischung kann über etwa 90 Minuten bei 60 bis 70 °C gerührt werden, nachfolgend wird üblicherweise ein Wasser/Alkoholgemisch abdestilliert, insbesondere bis das Gewicht der Reaktionsmischung in etwa der ursprünglich vorgelegten Wassermenge entspricht.

Gegenstand der Erfindung ist auch das folgende Verfahren zur Herstellung der Zusammensetzung, als auch eine Zusammensetzung erhältlich nach diesem Verfahren, insbesondere mit den folgenden Einzelschritten,

1) Vorlegen von Wasser und gegebenenfalls einer Säure oder eines Katalysators, insbesondere werden 60 bis 95 Gew.-% Wasser vorgelegt, bevorzugt um 80 bis 95 Gew.-%; vorzugweise in einer Menge, das der pH-Wert zwischen 1 bis 6 liegt, insbesondere durch Zugabe von etwa 1 bis 5 Gew-%, bevorzugt von etwa 2 Gew.-% einer Säure,
2) Erwärmen der Mischung aus Wasser und gegebenenfalls einer Säure oder eines Katalysators auf eine Temperatur zwischen 40 bis 100 °C, bevorzugt zwischen 50 bis 90 °C, besonders bevorzugt auf um 55 bis 70 °C, insbesondere auf etwa 60 bis 65 °C,
3) Zugabe eines oder mehrerer Silane der Formeln IX, II, IV, VI, VII und/oder VIII oder der genannten Hydrolyse- und/oder Kondensationsprodukte und/oder Mischungen dieser; insbesondere zu 2 bis 40 Gew.-%, bevorzugt zwischen 5 bis 15 Gew.-%, insbesondere ad 100 Gew.-% der Reaktionsmischung; insbesondere sollte der pH-Wert zwischen 1,5 bis 6 gehalten werden;
4) Rühren über einen Zeitraum von 40 bis 400 Minuten, inklusive der Zugabe der Silane, insbesondere über 50 bis 240 Minuten, bevorzugt über 60 bis 200 Minuten, besonders bevorzugt um 60 bis 180 Minuten, insbesondere bei

der genannten Temperatur,

5) gegebenenfalls weitere Zugabe eines oder mehrerer Silane der Formeln IX; II, IV, VI, VII und/oder VIII; insbesondere 1 bis 5 Gew.-% ad 100 Gew.-% der Reaktionsmischung, sofern nicht schon unter Schritt 3) ad 100 Gew.-% eingestellt wurde;

6) gegebenenfalls weiteres Rühren über einen Zeitraum von 10 bis 400 Minuten, inklusive der Zugabe der Silane, insbesondere über 10 bis 240 Minuten, bevorzugt über 20 bis 180 Minuten, besonders bevorzugt um 20 bis 160 Minuten, insbesondere bei der genannten Temperatur,

7) Entfernen eines Alkohol/Wasser-Gemisches, insbesondere durch Destillation, beispielsweise bei erhöhter Temperatur und vermindertem Druck, bevorzugt bis die Reaktionsmischung bzw. Zusammensetzung im Wesentlichen lösemittelfrei ist, beispielsweise bis die verbleibende Menge an Reaktionsmischung der Menge an vorgelegtem Wasser in der Stufe 1) entspricht.

Das Wasser in 1) wird in Bezug auf die gesamte Reaktionsmischung besonders bevorzugt zu etwa 90 Gew.-% vorgelegt, üblicherweise wird eine Säure in der Menge zugesetzt, das nach Zugabe des oder der Silane der Formeln IX, II, IV, VII und/oder VIII der pH-Wert zwischen 1 bis 6, bevorzugt zwischen 1,5 und 6,0 liegt. Üblicherweise sind dies um 0,5 bis 1,5 Gew.-% der Reaktionsmischung. Ad 100 Gew.-% der Reaktionsmischung werden mindestens ein oder mehrere Silane der Formeln IX, II, IV, VII und/oder VIII zudosiert. Dies sind um 9,5 bis 8,5 Gew.-% der Reaktionsmischung. Dem Fachmann ist klar, dass die Zusammensetzungen auch deutlich höhere oder niedrigere Gehalte an Siliciumverbindungen enthalten können und die Säuremenge dementsprechend anzupassen ist.

Abweichend von Verfahren des Standes der Technik werden die substituierten Alkoxysilane in den vorgenannten Verfahren bei einem Wassergehalt von 50 bis 95 Gew.-%, insbesondere bei 65 bis 95 Gew.-% an Wasser, hydrolysiert. Der Wassergehalt ist bezogen auf die Menge an vorgelegtem Wasser oder Gesamtwassergehalt in der gesamten Reaktionsmischung bevor Alkohol und/oder Wasser aus dem Gemisch entfernt werden. Zusätzliches Wasser kann aus wässrig zugesetzten Säuren, Katalysatoren oder auch aus wässrigen Silanen bzw. deren Hydrolyse- und/oder Kondensationsprodukten in die Reaktionsmischung eingetragen werden.

Gemäß einer erfindungsgemäßen Alternative wird mindestens ein tris-aminofunktionelles Alkylalkoxysilan der Formel IX und mindestens ein Alkylalkoxysilan der allgemeinen Formel VI in dem Verfahren eingesetzt. Besonders bevorzugte Verbindungen sind Tris-AMEO, Tris-AMMO und Propyltrialkoxysilan, wie n-Propyl-trimethoxysilan, n-Propyltriethoxysilan, Methyltriethoxysilan, Methyltriethoxysilan, Octyltrimethoxysilan, Octyltriethoxysilan, Vinyltrimethoxysilan, Vinyltriethoxysilan, N-n-Butyl-3-aminopropyltrimethoxysilan, N-n-Butyl-3-aminopropyltriethoxysilan, 3-Aminopropyltrimethoxysilan, 3-Aminopropyltriethoxysilan, 3-Methacryloxypropyltrimethoxysilan, 3-Glycidyloxypropyltrimethoxysilan, - um nur einige Beispiele zu nennen.

Die Einstellung des pH-Wertes der Zusammensetzung erfolgt in der Regel bereits bei ihrer Herstellung, so dass eine spätere Einstellung des pH-Wertes unterbleiben kann. Als Säuren zur Einstellung des pH-Werts, insbesondere als HX, wobei X ein anorganischer oder organischer Säure-Rest ist, kommen vorzugsweise Ameisensäure, Essigsäure, Zitronensäure, ein saures Kieselgel bzw. ein saures Kieselsol, Eisessig, Salpetersäure, Schwefelsäure und/oder Phosphorsäure zum Einsatz. Als Kieselsole kommen insbesondere Levasil 100S als saures Kieselsol, aber auch gefällte Kieselsäure, dispergierte Kieselsäure in Betracht. Als Katalysator kann beispielsweise Zirkon-n-propylat oder ein anderer üblicher Katalysator eingesetzt werden.

In der Regel werden Wasser und eine Säure vorgelegt und die Silane der allgemeinen Formel IX, II, IV, VI, VII und/oder VIII und/oder daraus abgeleitete Produkte, wie protonierte Silane, Hydrolyse-, Co-Kondensations- und/oder Kondensationsprodukte, nacheinander und/oder als Mischung zugegeben, hydrolysiert und gegebenenfalls kondensiert, insbesondere bei einem pH-Wert zwischen 1,5 und 6, bevorzugt bei einem pH-Wert zwischen 3,0 bis 5,4. Durch weitere Zugabe von Säure kann der pH-Wert während des Verfahrens gehalten oder eingestellt werden. Dabei können die Silane der allgemeinen Formeln IX, II, IV, VI, VII und/oder VIII, deren Hydrolyse-, Co-Kondensations-, Kondensationsprodukte und/oder deren Mischungen in wässriger und/oder alkoholischer Lösung zugegeben werden. Dies kann nacheinander oder auch in einer Mischung erfolgen.

Bei einer Verfahrensführung in einer wässrig/alkoholischen Lösung, durch Zugabe von Alkohol oder einer alkoholischen Silan-Lösung kann die Hydrolyse bei einem pH-Wert unterhalb von 12, d. h. auch im Alkalischen, durchgeführt werden. Anschließend wird der Hydrolysealkohol und gegebenenfalls zusätzlich zugegebener Alkohol aus der Reaktionsmischung im Wesentlichen vollständig entfernt. Die pH-Wert Einstellung kann vor oder nach der Entfernung des Alkohols erfolgen.

Die Zugabe einer alkoholischen Lösung zum vorgelegten, angesäuerten Wasser kann insbesondere auf folgende Weise erfolgen. Zunächst werden ein Alkohol, beispielsweise Ethanol, mit einem Silan der Formel IX, II, IV, VI, VII und/oder VIII gegebenenfalls mit wenig Wasser und gegebenenfalls einem Katalysator oder gegebenenfalls einer Säure versetzt und nach kurzer Reaktion dem angesäurten, vorgelegten Wasser zugegeben. Sofern der pH-Wert nicht im gewünschten Bereich liegt, kann er durch Zugabe weiterer Säure modifiziert werden. Gleichfalls kann auch nach Zugabe mindestens eines Silans zur Reaktionsmischung weiteres Wasser zugegeben werden.

Je nach gewünschten Eigenschaften der Zusammensetzung kann es zweckmäßig sein, bereits im Verfahren anorganische Füllstoffe, wie $TiO_2$, $SiO_2$, Kieselsole, Aerosil Dispersionen und/oder $Al_2O_3$zuzusetzen.

Zur Vollständigen Entfernung des Hydrolysealkohols oder des zugegebenen Alkohols, kann während des Verfahrens der Zusammensetzung immer wieder Wasser zugegeben werden, das azeotrop mit dem Alkohol abdestilliert wird, bis die Zusammensetzung im Wesentlichen alkoholfrei ist.

Alternativ kann ein wässriges Silan der allgemeinen Formel IX und/oder dessen Co-Kondensationsprodukt oder Kondensationsprodukt, beispielsweise ein Co-Kondensationsprodukt der Formel IX mit VI, vorgelegt werden, bei einem niedrigen pH-Wert, beispielsweise bei 1,0 bis 4,8 hydrolysiert werden, und die Silane der allgemeinen Formeln II, IV, VII und/oder VIII und/oder deren Kondensationsprodukte werden einzeln oder als Mischung zugegeben, bevorzugt wird mindestens ein Silan der Formel VI zugegeben. Durch Zugabe von weiterem Aminosilan der Formeln IX, II und/oder IV kann der pH-Wert angehoben werden. Nach Zugabe des letzten Silans kann die Reaktionsmischung unter Rühren noch bei einer Temperatur zwischen 30 und 100 °C im Wesentlichen vollständig hydrolysieren. Bevorzugt wird die Hydrolyse im vorliegenden Verfahren bei 40 bis 100 °C, besonders bevorzugt bei 50 bis 90 °C, ganz besonders bevorzugt bei 55 bis 70 °C, insbesondere bei etwa 60 bis 65 °C, durchgeführt.

Gegenstand der Erfindung ist daher auch ein Verfahren zur Herstellung einer Zusammensetzung enthaltend im Wesentlichen wasserlösliche, tris-aminofunktionelle und im Wesentlichen alkoxygruppenfreie Siliciumverbindungen, Wasser und eine Säure, als auch eine Zusammensetzung erhältlich nach diesem Verfahren, wobei

1) eine wässrige Lösung mindestens eines wasserlöslichen Silans der allgemeinen Formel IX, IV und/oder VII oder dessen wasserlösliche Kondensationsprodukte, insbesondere auch Co-Kondensationsprodukte aus Silanen der Formel IX, IV und/oder VII untereinander oder mit VI und/oder VIII beispielsweise auch mit Kieselsolen, oder die wasserlöslichen Hydrolyseprodukte eines Silans der allgemeinen Formel VI, insbesondere das methylfunktionalisierte, vorgelegt wird, insbesondere mindestens teilweise protoniert, und
2) gegebenenfalls Säure, gegebenenfalls Alkohol und gegebenenfalls ein Katalysator und gegebenenfalls ein oder mehrere weitere Silane der allgemeinen Formeln II, IV, VI, VII und/oder VIII oder deren Hydrolyse- und/oder Kondensationsprodukte und/oder Mischungen dieser zugegeben werden, und
3) hydrolysiert werden und der Alkohol im Wesentlichen entfernt wird.

Je nach gewünschten Eigenschaften der Zusammensetzung kann es zweckmäßig sein, bereits im Verfahren anorganische Füllstoffe, wie $TiO_2$, $SiO_2$, Kieselsole, Aerosil Dispersionen und/oder $Al_2O_3$ zuzusetzen.

Der bereits vorhandene und/oder bei der Umsetzung entstandene Alkohol wird in allen erfindungsgemäßen Verfahrensvarianten im Wesentlichen, bevorzugt vollständig, aus dem Reaktionsgemisch entfernt. Die destillative Abtrennung des Alkohols wird vorzugsweise unter vermindertem Druck durchgeführt. Die destillative Entfernung des Alkohols wird vorzugsweise solange durchgeführt, bis im Kopf der Kolonne eine Temperatur erreicht ist, die der Siedetemperatur von Wasser entspricht. Sofern der Alkohol nicht im Wesentlichen vollständig entfernt werden konnte, wird erneut Wasser zugegeben und weiter ein Alkohol/Wasser-Gemisch entfernt, insbesondere destillativ entfernt. Diese Verfahrensweise wird wiederholt, bis der Alkohol im Wesentlichen entfernt ist. Als im Wesentlichen entfernt gilt der Alkohol, wenn sein Gehalt unter 4 Gew.-%, insbesondere unter 2 Gew.-%, bevorzugt unter 1, besonders bevorzugt unter 0,5 Gew.-%, unter 0,1 Gew.-% oder unter 0,05 Gew.-% liegt. Die resultierende Zusammensetzung ist im Wesentlichen alkoholfrei, d. h. gegebenenfalls zugegebener Alkohol als auch der Hydrolysealkohol werden bevorzugt gänzlich nach der etwa vollständigen Hydrolyse aus dem Reaktionssystem entfernt. Die zur Anwendung kommenden Zusammensetzungen sind daher im Wesentlichen frei von freien Alkoholen und/oder Alkoxy-Resten, wenn der Gehalt kleiner 4 Gew.-%, insbesondere unter 2 Gew.-%, bevorzugt unter 1, besonders bevorzugt unter 0,5 Gew.-%, unter 0,1 Gew.-% oder unter 0,05 Gew.-% beträgt.

Während der Reaktion sollte der pH-Wert unterhalb pH 12, insbesondere zwischen 1 bis 6, beispielsweise zwischen 1,5 bis 6, insbesondere 3,0 bis 5,4, bevorzugt 3,5 bis 4,8, betragen. Auch nach dem Entfernen des Alkohols aus der Reaktionsmischung kann der pH-Wert der Zusammensetzung zwischen 1,0 bis 6, insbesondere zwischen 1,5 und 6, bevorzugt zwischen 3,0 und 5,4 liegen. Die eingesetzten Tris-Amino, Bis-Amino, Amino-, Alkyl-, Epoxy-, Polyalkylglykolalkyl-, 3-Glycidoxyalkyl-, Glycidoxyalkyl-, Fluoralkyl-, Mercapto-, Ureidoalkyl-, Alkenyl-, Bernsteinsäure-, Bernsteinsäureanhydrid-, Acryloxyalkyl-Rest substituierten Alkoxysilane und/oder Tetraalkoxysilane liegen vorzugsweise insgesamt mit einem Gehalt von 5 bis 50 Gew.-%, insbesondere mit 5 bis 50 Gew.-%, bevorzugt mit 7,5 bis 40 Gew.-%, besonders bevorzugt mit 10 bis 30 Gew.-%, nach Entfernen des Alkohol in Bezug auf die eingesetzten Alkoxysilane in der Zusammensetzung, vor.

Nach dem erfindungsgemäßen Verfahren hergestellte Zusammensetzungen sind stabile und klare oder zum Teil auch opaleszierend bis trübe Lösungen, im Wesentlichen frei von organischen Lösungsmitteln, lassen sich mit Wasser in jedem Verhältnis verdünnen, entwickeln bei Wasserzugabe im Wesentlichen keine Hydrolysealkohole, und besitzen einen Flammpunkt von mehr als 63 °C, vorzugsweise von mehr als 80 °C, besonders vorzugsweise von mehr als 93°C.

Ein weiterer Gegenstand der Erfindung ist eine wässrige Zusammensetzung bzw. ein wässriges Silansystem enthaltend, im Wesentlichen wasserlösliche, tris-aminofunktionelle und im Wesentlichen alkoxygruppenfreie Siliciumverbindungen, Wasser und eine Säure, erhältlich durch

1) Vorlegen von Wasser, einer Säure und gegebenenfalls Alkohol und
2) Umsetzten mindestens eines tris-aminofunktionellen Alkoxysilans der Formel IX, gegebenenfalls mit mindestens einem Silan der allgemeinen Formel II, IV, VI, VII und/oder VIII oder mindestens zwei der vorgenannten Silane, wobei das Substitutionsmuster der Silane vorstehend beschrieben ist, und/oder deren Hydrolyse- und/oder Kondensationsprodukte und/oder Mischungen dieser, gegebenenfalls in einer wässrigen oder wässrig/alkoholischen oder alkoholischen Phase,
3) Hydrolysieren, insbesondere vollständiges Hydrolysieren, im Wesentlichen vollständiges Entfernen des Alkohols, insbesondere kann weiteres Wasser zugesetzt und als Wasser/Alkohol-Gemisch entfernt werden. Dieser Schritt kann wiederholt werden, bis die wässrige Zusammensetzung im Wesentlichen alkoholfrei ist.

Ein Gegenstand der Erfindung ist ferner ein Verfahren zur Herstellung einer Zusammensetzung enthaltend im Wesentlichen wasserlösliche, tris-aminofunktionelle und im Wesentlichen alkoxygruppenfreie Siliciumverbindungen, Wasser und eine Säure, sowie eine Zusammensetzung erhältlich nach diesem Verfahren, wobei

1) ein organisches Lösungsmittel, gegebenenfalls Wasser, gegebenenfalls eine Säure und/oder gegebenenfalls ein Katalysator vorgelegt werden und
2)

- mindestens ein Tris-Aminoalkoxysilan der Formel IX und gegebenenfalls
- mindestens ein Bis-Aminoalkoxysilan der Formel II und/oder dessen Hydrolyse- und/oder Kondensationsprodukte und gegebenenfalls
- mindestens ein Aminoalkylalkoxysilan der Formel IV und/oder dessen Hydrolyse- und/oder Kondensationsprodukte und gegebenenfalls
- mindestens ein Alkylalkoxysilan der allgemeinen Formel VI und/oder dessen Hydrolyse- und/oder Kondensationsprodukte, und gegebenenfalls
- mindestens ein Epoxy- oder Ether-Alkoxysilan der allgemeinen Formel VII und/oder dessen Hydrolyse- und/oder Kondensationsprodukte, und gegebenenfalls
- mindestens ein organofunktionelles Alkoxysilan der Formel VIII und/oder dessen Hydrolyse- und/oder Kondensationsprodukte,
- insbesondere mindestens zwei der vorstehend beschriebenen Alkoxysilane, Hydrolyse- und/oder Kondensationsprodukte und/oder Mischungen dieser,
- hydrolysiert werden, insbesondere vollständig hydrolysiert werden und der Hydrolysealkohol und das Lösemittel im Wesentlichen entfernt werden.

Die Silane der Formeln IX, II, IV, VI, VII und/oder VIII entsprechen den vorstehenden Definitionen. Beispielsweise kann IX mit IV, IX mit II und VI, IX mit VI, IX mit VII, IX mit VIII oder VII, II, IV und VI oder weitere denkbare Kombinationen in dem Verfahren eingesetzt werden.

Als Lösemittel kommt insbesondere ein Alkohol, ausgewählt aus der Gruppe Methanol, Ethanol, Propanol und/oder eine Mischung dieser in Betracht.

Zweckmäßige Lösemittel können aber auch Essigester, THF, Ketone oder Kohlenwasserstoffe sein.

Erfindungsgemäß wird ein Alkohol zusammen mit mindestens einem der Silane der allgemeinen Formeln IX, II, IV, VI, VII und/oder VIII, deren Hydrolyse- und/oder Kondensationsprodukte und/oder Mischungen dieser vorgelegt. Anschließend können Wasser und/oder Säure zugegeben werden. Wird nur Wasser zugegeben, kann die Hydrolyse im Alkalischen erfolgen.

Das Verfahren wird bevorzugt so durchgeführt, dass ein Alkohol und gegebenenfalls Wasser vorgelegt werden, mindestens ein Tris-Aminoalkoxysilan der allgemeinen Formel IX und/oder dessen Kondensationsprodukt zugegeben und hydrolysiert sowie gegebenenfalls kondensiert werden. Die Reaktionsmischung wird durch die Zugabe des Tris-Aminoalkoxysilans der allgemeinen Formel IX alkalisch. Erfindungsgemäß werden mindestens ein Tris-Aminoalkylalkoxysilan der Formel IX und ein Alkylalkoxysilan der allgemeinen Formel VI eingesetzt.

Wird Alkohol und gegebenenfalls Wasser und gegebenenfalls eine Säure vorgelegt, werden ein Tris-Aminoalkoxysilan der allgemeinen Formel IX und/oder dessen Kondensationsprodukt zugegeben und hydrolysiert sowie gegebenenfalls kondensiert. Bevorzugt wird anschließend mindestens ein Alkylalkoxysilan der Formel VI und gegebenenfalls mindestens ein Aminoalkylalkoxysilan der Formel IV, gegebenenfalls mindestens ein Epoxy- oder Ether-Alkoxysilan der allgemeinen Formel VII und gegebenenfalls mindestens ein organofunktionelles Alkoxysilan der Formel VIII und/oder

deren Kondensationsprodukte nacheinander oder als Mischung zugegeben. Die Hydrolyse erfolgt in diesem Fall im Alkalischen, bevorzugt liegt der pH-Wert unter 12.

Die Zugabe der Silane der allgemeinen Formel IX, II, IV, VI, VII oder VIII und/oder daraus abgeleiteter Produkte, wie Hydrolyse- und/oder Kondensationsprodukte, wie Co-Kondensationsprodukte, kann nacheinander oder als Mischung erfolgen. Gleichfalls kann die Zugabe der Silane der allgemeinen Formeln IX, II, IV, VI, VII und/oder VIII und/oder deren Kondensationsprodukte in wässriger und/oder alkoholischer Lösung erfolgen. Bei Bedarf kann während des Verfahrens mindestens ein anorganischer Füllstoff, wie Titandioxid, Siliziumdioxid, Kieselsole, eine Aerosil Dispersion oder Aluminiumoxid, zugesetzt werden. Wird vor oder während der Hydrolyse keine Säure zugeben kann der pH-Wert alkalisch werden, insbesondere kann er unterhalb von 12 liegen. Die Reaktion kann bei 30 - 100 °C, bevorzugt zwischen 55 und 80 °C, durchgeführt werden. Nach der Hydrolyse und gegebenenfalls erfolgter Kondensation kann der pH-Wert auf einen Wert zwischen 1,0 und 7,0 eingestellt werden. Dies geschieht durch Zugabe einer Säure.

In allen Verfahren kann das Lösemittel und der bei der Umsetzung entstandene Alkohol destillativ aus dem Reaktionsgemisch entfernt werden. Die destillative Abtrennung des Lösemittels und/oder des Alkohols wird vorzugsweise unter vermindertem Druck durchgeführt. Die destillative Entfernung wird vorzugsweise solange durchgeführt, bis im Kopf der Kolonne eine Temperatur erreicht ist, die der Siedetemperatur von Wasser entspricht. Sofern der Alkohol und/oder das Lösemittel nicht im Wesentlichen vollständig entfernt werden konnte, wird erneut Wasser zugegeben und weiter ein Lösemittel/Wasser bzw. Alkohol/Wasser-Gemisch entfernt, insbesondere destillativ entfernt. Diese Verfahrensweise wird wiederholt, bis der Alkohol im Wesentlichen entfernt ist.

Die resultierende Zusammensetzung ist im Wesentlichen lösemittelfrei entsprechend vorstehender Definition.

Gegenstand der Erfindung ist auch die Verwendung einer erfindungsgemäßen Zusammensetzung in Mischungen mit weiteren Silan basierten Zusammensetzungen, insbesondere umfasst die Mischung eine Zusammensetzung enthaltend tris-aminofunktionelle Siliciumverbindungen zusammen mit einer Silan basierten Zusammensetzung auf Basis von alkyl-, alkenyl-, aryl-, epoxy-, dihydroxyalkyl-, bis- aminoalkyl-, aminoalkyl-, polyalkylglykolalkyl-, halogenalkyl-, mercaptoalkyl-, sulfanalkyl-, ureidoalkyl-, acryloxyalkyl-funktionellen und/oder tetraalkoxy-funktionellen Silanen und/oder deren Mischungen. Insbesondere senkt die Zugabe der erfindungsgemäßen Zusammensetzung in einer Mischung mit einem weiteren Silan die Härtungstemperatur, wobei bevorzugt die abweisenden Eigenschaften des weiteren Silans erhalten bleiben oder verbessert werden.

Somit ist Gegenstand der Erfindung die Verwendung einer erfindungsgemäßen Zusammensetzung oder einer Mischung zur Hydrophobierung, als Korrosionsschutz, als Haftvermittler, als Primer, zur Gesteinsverfestigung, zur Herstellung von Barriereschichten und/oder Oleophobierung von Substratoberflächen. Die Verwendung kann sich auch darauf erstrecken, dass die ausgehärteten Zusammensetzungen oder Mischungen eine Schicht bilden, die eine leichtere Entformung von Gussmodellen erlaubt. Somit ist auch Gegenstand der Erfindung die Verwendung als Entformungshilfsmittel.

Ebenfalls können erfindungsgemäße Zusammensetzungen bzw. entsprechende Mischungen zur Erzeugung biozid, fungizid und/oder viruzid wirkender Beschichtungen verwendet werden.

Die erfindungsgemäßen Zusammensetzungen und/oder Mischungen können zur Hydrophobierung von Substratoberflächen oder Substraten, beispielsweise mit freien Hydroxyfunktionen, verwendet werden. Durch die Vernetzung mit den Hydroxyfunktionen und/oder über eine mögliche Komplexbildung und/oder Reaktion der Aminofunktionen wird eine hohe Festigkeit der aufgebrachten Schicht auf den Substratoberflächen erzielt. Allgemein können die Zusammensetzungen und/oder Mischungen zur Behandlung oder Modifizierung von Substraten und/oder Substratoberflächen, insbesondere zum Aufbau von Barriereschichten auf Substratoberflächen und/oder zur Gesteinsverfestigung genutzt werden. Bevorzugt werden die Zusammensetzung(en) oder Mischungen zur Hydrophobierung von Metalloberflächen oder vorbehandelten Metalloberflächen (chromitiert, chromatiert, Zn-phosphatiert, phosphatiert, eloxiert), wie beispielsweise Zink, Edelstahl, Aluminium, Stahl, Titan, Magnesium, Legierungen, von Glasoberflächen, organischen Materialien, wie Kunststoffoberflächen oder, insbesondere von Naturfasern, wie beispielsweise Papier, Karton, Baumwolle oder Holz, von mineralischen Oberflächen, wie Beton, Ziegelsteinen, Sandstein, Gips sowie weiteren anorganischen Oberflächen eingesetzt. Basieren die Zusammensetzungen auf Siliciumverbindungen enthaltend Fluorsilane, in Form von Co-Kondensaten oder in der Mischung, dann können auch oleophobe und Anti-Graffiti-Eigenschaften oder Anti-Fingerprint-Eigenschaften erzielt werden. Weitere Anwendungsgebiete erschließen sich, bei der Primerung von Oberflächen, aus Glas, Metall, mineralischen Oberflächen, wie Beton, Mörtel, Estrich oder Sandstein, Porzellan, Asphalt, zur Beschichtung von Rohren, wie Steinrohren, zur Abdichtung von Fußböden, zur Beschichtung von Gussformen, insbesondere zur Innenbeschichtung und leichteren Entformbarkeit, oder organischen Materialen, insbesondere von Naturfasern, wie beispielsweise Papier, Karton, Baumwolle oder Holz. Beispielsweise durch die Primerung von Metalloberflächen kann eine verbesserte Haftung und damit unter anderem ein besserer Korrosionsschutz erreicht werden. Beispiele für behandelte oder modifizierte Oberflächen sind elektronische Bauteile, Karosserieteile von Fahrzeugen, sowie weitere, dem Fachmann bekannte geeignete Substrate.

Durch die Primerung von beispielsweise metallischen Oberflächen kann eine bessere Haftung der Deckschicht und damit unter anderem auch ein besserer Korrosionsschutz erzielt werden. Weiterhin können die Zusammensetzungen

Mischungen auch zur Primerung oder Versiegelung bzw. als Barriereschicht von behandelten Metalloberflächen eingesetzt werden. Dabei können phosphatierte, chromitierte, chromatierte oder auch andere vorbehandelte Metalloberflächen behandelt oder modifiziert werden. Ferner können so behandelte Oberflächen vorteilhaft mit Pulverlacken, 2K-Flüssiglacken bzw. 1 K-Flüssiglacken beschichtet werden.

Beispielhaft, aber nicht abschließend, sind als behandelte oder modifizierte Gläser, Fassadenteile aus Glas, Fenster, Autoscheiben, Glasfasern, optische Gläser, Linsen zu nennen.
Darüber hinaus können erfindungsgemäße Zusammensetzungen vorteilhaft auch als Komponente für Flüssiglacke oder Pulverlacke bzw. als Bestandteile in einem Flüssiglack oder Pulverlack verwendet werden.

Die erfindungsgemäßen Zusammensetzungen und/oder Mischungen können durch Rollen, Streichen, Sprühen, Extrudieren, Kneten, Mischen, Rühren oder weitere dem Fachmann geläufige Methoden auf die Substrate aufgebracht oder eingebracht werden.

Zudem können die wässrigen Zusammensetzungen zur Gesteinsverfestigung bei der Erdölförderung, beispielsweise bei der Herstellung von Beton- und/oder Mörtelfertigbauteilen, wie Rohren etc., oder in wässrigen Lack- oder Harz-Formulierungen oder Lack-Dispersionen oder generell in Dispersionen eingesetzt werden. So kann die wässrige Zusammensetzung auch als Zusatz in Mörteln, Estrich oder auch auf den ausgehärteten Produkten zur Versiegelung der Oberfläche aufgetragen werden. Gemäß einer weiteren Anwendungsmöglichkeit können die erfindungsgemäßen Zusammensetzungen, insbesondere durch Zugabe von Additiven und/oder Füllstoffen in ihren Produkteigenschaften weiter modifiziert werden. So kann beispielsweise durch Zugabe eines Benetzungshilfsmittels eine verbesserte Verteilung auf einer Oberfläche erzielt werden. Durch Zugabe von Katalysatoren, beispielsweise Zirkon-n-propylat, oder eine Modifizierung des pH-Wertes kann die Aushärtung der fertigen Zusammensetzung beschleunigt werden.

Gegenstand der Erfindung ist auch die Verwendung einer Zusammensetzung oder Mischung als Sol-Gel-System oder als ein im Wesentlichen Sol-Gel freies System zur Herstellung mindestens einer zumindest partiellen Schicht, bevorzugt einer durchgängigen Schicht bzw. Beschichtung, insbesondere einer ausgehärteten Schicht, auf einem organischen und/oder anorganischen Substrat und/oder organisch-anorganischem Kompositmaterial zum Schutz vor Korrosion und/oder UV-Strahlung.

Gegenstand der Erfindung sind auch Beschichtungen an Substraten oder auf Substratoberflächen, wie metallischen Oberflächen oder von Legierungen, insbesondere auf chromatierten, phosphatierten oder chromitierten metallischen Oberflächen, durch Aushärten einer Zusammensetzung oder Mischung mit einem Substrat oder auf einem Substrat nach einem der Ansprüche 1 bis 14.

Gegenstand der Erfindung sind auch beschichtete oder verfestigte Produkte, die durch Verwendung und insbesondere Aushärtung, der Zusammensetzung und/oder Mischungen der nach einem der Ansprüche 1 bis 14 mit einem Substrat oder auf einem Substrat erhältlich sind.

Als Substrate sind hier insbesondere - aber nicht ausschließlich - zu nennen: beschichtete Gläser, wie Silikat basierte Gläser, beispielsweise Autoscheiben, Linsen, Laborgläser etc., oder beschichtetes Acrylglas, korrosionsgeschützte Metalle, Legierungen oder korrosionsgeschützte, mineralische Substrate, wie ausgehärteter Beton oder Mörtel, oder die genannten organischen Materialien, insbesondere Produkte aus behandelten oder beschichteten Naturfasern. Beispiele dafür sind mit der Zusammensetzung behandelte Bewehrungen, die vor ihrer Verwendung im Beton mit der Zusammensetzung beschichtet werden. Zudem kann auch eine noch nicht ausgehärtete Betonmischung mit einer erfindungsgemäßen Zusammensetzung gemischt, verarbeitet und anschließend aushärten. In diesem Fall ist darauf zu achten, dass die Zusammensetzung verarbeitbar bleibt, beispielsweise durch Wahl des richtigen pH-Wertes oder anderer Parameter. Auf diese Weise können beispielsweise hydrophober, korrosionsbeständiger Beton oder Produkte aus Beton erhalten werden, wie Abflussrohe oder Fertigbauteile für Gebäude. Der so behandelte Beton weist eine erheblich bessere Korrosionsbeständigkeit gegenüber Umwelteinflüssen auf.

Die Erfindung wird anhand der folgenden Beispiele näher erläutert.

**Beispiele:**

Analytische Untersuchungen:

Rückstand:

Der Feststoffgehalt der wässrigen Silansysteme wird wie folgt bestimmt:

1 g der Probe wird in eine kleine Porzellanschale eingewogen und bei 105°C bis zur Gewichtskonstanz im Trockenschrank getrocknet.

$SiO_2$-Gehalt:

1,0 bis 5,0 g der Probe werden in einem 400-ml-Becherglas mit einer Kjeldahl-Tablette und 20 ml Schwefelsäure versetzt und zunächst langsam erhitzt. Dabei wird das Becherglas mit einem Uhrglas abgedeckt. Die Temperatur wird erhöht, bis die Schwefelsäure stark raucht und alle organischen Bestandteile zerstört sind und die Lösung klar und hell bleibt. Die kalte Aufschlusslösung wird mit dest. Wasser auf ca. 200 ml verdünnt und kurz aufgekocht (Wasser am Rande des Becherglases unter die Säure fließen lassen). Der Rückstand wird durch ein Weißbandfilter filtriert und mit heißem Wasser gewaschen, bis das Waschwasser einen pH-Wert von > 4 anzeigt (pH-Papier). Der Filter wird in einem Platintiegel getrocknet, verascht und 1 Stunde bei 800 °C im Muffelofen geglüht. Der Rückstand wird nach dem Wiegen mit Flusssäure abgeraucht, der Tiegel mittels eines Gebläsebrenners geglüht und gegebenenfalls nochmals bei 800 °C geglüht und nach dem Abkühlen gewogen. Die Differenz beider Wägungen entspricht dem Gehalt an $SiO_2$.

$$\text{Auswertung: } D \times 100/E = \text{Gew.-\% SiO2}$$

D = Gewichtsdifferenz vor und nach dem Abfluorieren in mg
100 = Umrechnung auf %
E = Einwaage in mg

Bestimmung des freien Methanol- und Ethanolgehalts:

Die Alkohol-Bestimmung wurde mittels GC durchgeführt.
Säule: RTX 200 (60 m)
Temperaturprogramm: 90-10-25-240-0
Detektor: FID
Injektionsmenge: 1,0 µl
Innerer Standard: 2-Butanol

Eingesetzte Silane und Silansysteme:

| Handelsname | Produktbeschreibung | Hersteller |
|---|---|---|
| Dynasylan® Hydrosil 2926 | Wässriges epoxyfunktionelles Siloxanoligomer, alkoholfrei | Evonik Degussa |
| Dynasylan® F 8261 | Tridecafluoroctyltriethoxysilan | Evonik Degussa |
| Dynasylan® SIVO 110 | Wässrige Silanformulierung, VOC-frei | Evonik Degussa |
| Dynasylan® 1124 | Bis-[trimethoxysilylpropyl]amin | Evonik Degussa |
| | (Bis-AMMO) | |
| Dynasylan® 1122 | Bis-[triethoxysilylpropyl]amin (Bis-AMEO) | Evonik Degussa |
| Dynasylan® MTES | Methyltriethoxysilan | Evonik Degussa |
| Dynasylan® F 8815 | Wässriges fluoralkylfunktionelles Hydro-/oleophobes Beschichtungsmittel | Evonik Degussa |
| TYZOR NPZ | Zirkon-n-propylat | Du Pont |
| Levasil 100S/45% | Wässriges Kieselsol Teilchengröße 100 nm, pH = 4; Konz. 45 % | H.C. Starck GmbH |
| Dynasylan® AMMO | 3-Aminopropyltrimethoxysilan | Evonik Degussa |
| Dynasylan® AMEO | 3-Aminopropyltriethoxysilan | Evonik Degussa |
| Dynasylan® GLYMO | 3-Glycidyloxypropyltriemethoxysilan | Evonik Degussa |
| Dynasylan® PTMO | Propyltrimethoxysilan | Evonik Degussa |
| Dynasylan® VTMO | Vinyltrimethoxysilan | Evonik Degussa |

(fortgesetzt)

| Handelsname | Produktbeschreibung | Hersteller |
|---|---|---|
| | N-Formyl-3-amino-propyltriethoxysilan (Triethoxysilylpropylformamid) | |
| | Tris-[trimethoxysilylpropyl]amin (Tris-AMMO) | |

**Synthesebeispiel 1**

In einer 1-l-Rührapparatur mit Dosiervorrichtung und Rückflusskühler wurden 400,0 g Wasser 3,5 g Ameisensäure (Konz. HCOOH 85 %) vorgelegt. Die Lösung wurde auf 60 °C erwärmt. Über die Dosiervorrichtung wurden 32,0 g Tris-AMMO zudosiert. Der pH-Wert sollte ca. 4,3 betragen. Es wurde 90 Minuten lang (Dosierzeit eingeschlossen) bei 60 °C gerührt. Anschließend wurde 1 Stunde bei 65 °C gerührt und nachfolgend bei 130 bis 200 mbar 35,5 g eines Alkohol/Wasser-Gemisches abdestilliert. Die Auswaage des Rückstandes betrug 400 g. Das Produkt wurde bei Raumtemperatur über eine Seitz T-900 Filterplatte filtriert.
Die erhaltene Lösung war klar und leicht rötlich.

**Analytik zu Beispiel 1:**

Trockenrückstand: 6,6 % (w/w)
$SiO_2$-Gehalt: 5,5 % (w/w)
Freies Methanol: 0,3 %

**Synthesebeispiel 2**

In einer 1-l-Rührapparatur mit Dosiervorrichtung und Rückflusskühler wurden 400,0 g Wasser 4,8 g Ameisensäure (Konz. HCOOH 85 %) vorgelegt. Die Lösung wurde auf 60 °C erwärmt. Über die Dosiervorrichtung wurden 32,0 g einer Mischung aus 16,0 g Bis-AMMO und 16,0 g Tris-AMMO zudosiert. Der pH-Wert betrug etwa 4,3. Es wurde 90 Minuten lang (Dosierzeit eingeschlossen) bei 60 °C gerührt. Anschließend wurde 1 Stunde bei 65 °C gerührt. Bei 130 bis 200 mbar wurden 36,8 g eines Alkohol/Wasser-Gemischs abdestilliert. Die Auswaage des Rückstandes betrug 400 g. Das Produkt wurde bei Raumtemperatur über eine Seitz T-950 Filterplatte filtriert. Erhalten wurde eine klare, orangerötliche Flüssigkeit.

**Analytik zu Beispiel 2:**

Trockenrückstand: 5,7 % (w/w)
$SiO_2$-Gehalt: 2,8 % (w/w)
Freies Methanol: 0,2 %

**Synthesebeispiel 3**

In einer 1-l-Rührapparatur mit Dosiervorrichtung und Rückflusskühler wurden 400,0 g Wasser 3,5 g Ameisensäure (Konz. HCOOH 85 %) vorgelegt. Die Lösung wurde auf 60 °C erwärmt. Über die Dosiervorrichtung wurden 32,0 g Tris-AMMO zudosiert. Der pH-Wert betrug circa 4,3. Es wurde 60 Minuten, inklusive der Dosierzeit, bei 60 °C gerührt. Anschließend wurden 12 g PTMO zudosiert. Die Mischung wurde weitere 90 Minuten bei 65 °C gerührt. Nachfolgend wurden 47,5 g eines Alkohol/WasserGemisches bei 130 bis 200 mbar abdestilliert. Das erhaltene Produkt wurde über eine Seitz T-900 Filterplatte filtriert und eine klare, leicht rötliche Flüssigkeit erhalten.

**Analytik zu Beispiel 3:**

Trockenrückstand: 7,2 % (w/w)
$SiO_2$-Gehalt: 3,5 % (w/w)
Freies Methanol: 1,1 %

## Anwendungstechnische Beispiele

1. Methoden

1.1 Beschichtung der sandgestrahlten Glasplatten

Es ist darauf zu achten, dass die Oberflächen vor der Auftragung gereinigt werden und vor allem fettfrei sind. Vorbehandlung der Glasoberfläche (Größe der Glasplatten 0,07m x 0,15m).: Die Glasplatten wurden durch 5-minütiges Tauchen in einer 60°C warmen 1 %igen Ridoline C-72 Lösung entfettet, anschließend unter fließendem VE Wasser abgespült, kurz in einer 0,2 %igen $H_2SO_4$Lösung eingetaucht und gründlich mit VE Wasser abgespült. Die Glasoberfläche wurde anschließend mit einem Papiertuch abgetrocknet.

Die Systeme aus den Beispielen wurden mit einem getränktem Papiertuch durch Aufwischen auf der sandgestrahlten Oberfläche aufgetragen. Die daraus entstandenen Beschichtungen wurden anschließend mindestens 12 Stunden bei Raumtemperatur gehärtet.

1.2 Messung der statischen Randwinkel

Die Bestimmung der statischen Randwinkel erfolgt durch eine Mehrfachmessung mit dem Kontaktwinkelmessgerät G-15 der Firma KRÜSS in Anlehnung an DIN EN 828. Zur Überprüfung der hydrophoben Eigenschaften wurde der statische Randwinkel (RW) mit VE Wasser gemessen.

1.3 Bestimmung der Wasch und Scheuerbeständigkeit in Anlehnung an DIN 53778:

Die beschichten Glasplatten wurden in Anlehnung an DIN 53778 mit dem ERICHSEN Waschbarkeits- und Scheuerprüfgerät Modell 494 mit Isopropanol als Waschlösung überprüft.

1.4 Überprüfung der UV-Beständigkeit in Anlehnung an DIN EN ISO 4892-3:

Das eingesetzte Gerät zur Schnellbewitterung (QUV-se) stammt von der Firma Q-Panel und entspricht den Anforderungen der DIN EN ISO 4892-3. Die Strahlungsintensität auf der Oberfläche der Glasplatten beträgt 0,92 $W/m^2$ bei 340 nm.

Ein Bewitterungszyklus umfasst insgesamt 8 Stunden:

4 Stunden Bestrahlungszyklus bei 60°C, anschließend
3 Stunden 55 Minuten Kondenswasserzyklus bei 45°C und
5 Minuten Beregnungszyklus

Nach jeweils 161 h, 638 h und 1595 Stunden wurde der statische Randwinkel mit VE Wasser gemäß 1.2 bestimmt.

## Anwendungsbeispiel 1.5

12,5 g des Produkts aus Synthesebeispiel 1 wurden mit 0,5 g des wässrigen Produkts Dynasylan® F 8815 vermischt. Die Mischung wurde mit getränktem Papiertuch auf eine gereinigte sandgestrahlte Glasplatte (Größe = 8 x 15 cm) aufgetragen. Die daraus entstandenen Beschichtungen wurde 2 Tage lang bei Raumtemperatur getrocknet.

## Anwendungsbeispiel 1.6

15,0 g des Produkts aus Synthesebeispiel 1 wurden mit 3,0 g des wässrigen Produkts Dynasylan® F 8815 vermischt. Die Mischung wurde mit getränktem Papiertuch auf eine gereinigte sandgestrahlte Glasplatte (Größe = 8 x 15 cm) aufgetragen. Die daraus entstandenen Beschichtungen wurde 2 Tage lang bei Raumtemperatur getrocknet.

**Tabelle 1**

| Resultate der Wasch u. Scheuerbeständigkeit in Anlehnung an DIN 53778, | | | |
|---|---|---|---|
| Anwendungsbeispiel | RW $H_2O$ [°] | 1000 Zyklen | 2000 Zyklen |
| 1.5 | 128 | 127 | 120 |
| 1.6 | 136 | 135 | 127 |

**Tabelle 2**

| Resultate der UV-Beständigkeit | | | | |
|---|---|---|---|---|
| Anwendungsbeispiel | 0 h (unbelastet) | 161 h | 638 h | 1595 h |
| 1.5 | 128 | 102 | 91 | 68 |
| 1.6 | 135 | 124 | 125 | 129 |

Die Kontaktwinkel zeigen hervorragende hydrophobe Eigenschaften dieser Beschichtungen nach der Abriebs- und UV-Belastung auf. Der Test wurde hiermit bestanden.

2. Beschichtung der geschliffenen Edelstahlplatten

**2.1 Beschreibung der verwendeten Edelstahlplatten:**

Stahlbleche nach A.F.E.R.A. 4001 aus Legierung 1.4301, längs geraut auf Ra 0,05-0,4 $\mu$, Rz < 4 $\mu$. Größe = 200x50x2 mm, Herkunft Rocholl GmbH.

**2.2 Reinigung der Edelstahlplatten:**

10,0 g Ridolione C-72 wurden mit VE Wasser vermischt und auf 60°C aufgeheizt. Unter Rühren wurden die Edelstahlstreifen 30 Sekunden lang eingetaucht, anschließend unter fließendem VE Wasser abgespült und kurz in eine 0,2 %ige $H_2SO_4$-Lösung eingetaucht, mit VE Wasser abgespült anschließend mit einem Papiertuch abgetrocknet.

2.3 Bewertung der beschichteten Edelstahloberflächen nach Belastungstests

Visuelle Beurteilung der Beschichtung nach dem Auftragen von dest. Wasser, Essigreiniger (Frosch Essigreiniger), Senf (Löwensenf extra scharf) und einem Backofenreiniger (Sidol Backofen- und Grillreiniger). Dazu wird das Substrat mit den Prüfmedien auf einer etwa 3 cm großen runden Fläche bedeckt. Nach einer Stunde wird das Prüfmedium Wasser abgespült und die Substartfläche optisch bewertet.

(-) = Schicht zerstört bzw. abgelöst
(0) = Schicht vorhanden, aber leicht angegriffen
(+) = Schicht unverändert

**2.3. Beschichtung der Edelstahloberfläche:**

Eine längs geraute Edelstahloberfläche wurde mit der Formulierung zu ¾ beschichtet. Jeweils eine Platte wurde durch Aufwischen beschichtet. Die Beschichtung erfolgte mit einem in der Formulierung getränktem Baumwolltuch, in dem die Formulierung auf die Edelstahloberfläche aufgestrichen wurde. Die Härtung erfolgte bei Raumtemperatur.

**Tabelle 3**

| Resultate der Bleistifthärteprüfung, der Kochfestigkeit ausgewählter Synthesebeispiele der transparenten homogenen Beschichtungen auf längs geraute Edelstahloberflächen: | | | | | | |
|---|---|---|---|---|---|---|
| Beschichtung aus Synthesebeispiel | Kochtest | Bleistifthärte | 1 h Test Hac Reiniger | 1 h $H_2O$ bei Rt | 1 h Senf | 1 h Backofen -reiniger |
| 1 | | | + | + | + | + |

(fortgesetzt)

| Beschichtung aus Synthese-beispiel | Kochtest | Bleistifthärte | 1 h Test Hac Reiniger | 1 h $H_2O$ bei Rt | 1 h Senf | 1 h Backofen -reiniger |
|---|---|---|---|---|---|---|
| 2 | | | + | + | + | + |

Bewertung:

Visuelle Beurteilung der Beschichtung nach dem Essigreiniger und Wassertest

(-) = Schicht zerstört bzw. abgelöst
(0) = Schicht vorhanden, aber leicht angegriffen
(+) = Schicht unverändert

**Anwendungsbeispiel 2.4**

12,5 g des Produkts aus Synthesebeispiel 1 wurden mit 0,5 g des wässrigen Produkts Dynasylan® F 8815 vermischt. Die Mischung wurde mit getränktem Papiertuch auf eine gereinigte längs geraute Edelstahloberfläche (Größe = 8 200x50x2 mm) aufgetragen. Die daraus entstandenen Beschichtungen wurde 2 Tage lang bei Raumtemperatur getrocknet.

**Anwendungsbeispiel 2.5**

12,5 g des Produkts aus Beispiel 2 wurden mit 0,5 g des wässrigen Produkts Dynasylan® F 8815 vermischt. Die Mischung wurde mit getränktem Papiertuch auf eine gereinigte längs geraute Edelstahloberfläche (Größe = 8 200x50x2 mm) aufgetragen. Die daraus entstandenen Beschichtungen wurde 2 Tage lang bei Raumtemperatur getrocknet.

**Tabelle 4**

| Resultate der Bleistifthärteprüfung, der Kochfestigkeit ausgewählter Beispiele der transparenten homogenen Beschichtungen auf geschliffenen Edelstahloberflächen: | | | | | | |
|---|---|---|---|---|---|---|
| Anwendungsbeispiel | Kochtest | Bleistifthärte | 1 h Test Hac Reiniger | 1 h $H_2O$ bei Rt | 1 h Senf | 1 h Backofen -reiniger |
| 2.4 | | | + | + | + | + |
| 2.5 | | | + | + | + | + |

Bewertung:

Visuelle Beurteilung der Beschichtung nach dem Auftragen von dest. Wasser, Essigreiniger (Frosch Essigreiniger), Senf (Löwensenf extra scharf) und einem Backofenreiniger (Sidol Backofen- und Grillreiniger). Dazu wird das Substrat mit den Prüfmedien auf einer etwa 3 cm großen runden Fläche bedeckt. Nach einer Stunde wird das Prüfmedium Wasser abgespült und die Substartfläche optisch bewertet.

(-) = Schicht zerstört bzw. abgelöst
(0) = Schicht vorhanden, aber leicht angegriffen
(+) = Schicht unverändert

**3. Verringerung der Vernetzungstemperatur einer Dynasylan® SIVO 110 / SIVO 112 Abmischung auf einer geschliffenen Edelstahloberfläche Anwendungsbeispiel 3.1**

20,0 g des Produkts aus Synthesebeispiel 1 wurden mit 10,0 g des wässrigen Produkts Dynasylan® SIVO 112, 10,0 g Dynasylan® SIVO 110 und 40,0 g VE Wasser vermischt. Die Mischung wurde mit getränktem Papiertuch auf eine gereinigte geschliffene Edelstahloberfläche (Größe = 8 200x50x2 mm) aufgetragen. Die daraus entstandenen

Beschichtungen wurde 10 Minuten lang bei 120°C getrocknet.

**Vergleichsbeispiel 3.2**

10,0 g Dynasylan® SIVO 110 wurden mit 10,0 g des wässrigen Produkts Dynasylan® SIVO 112, und 20,0 g VE Wasser vermischt. Die Mischung wurde mit getränktem Papiertuch auf eine gereinigte geschliffene Edelstahloberfläche (Größe = 8 200x50x2 mm) aufgetragen. Die daraus entstandenen Beschichtung wurde 10 Minuten lang bei 120°C getrocknet.

**Vergleichsbeispiel 3.3**

10,0 g Dynasylan® SIVO 110 wurden mit 10,0 g des wässrigen Produkts Dynasylan® SIVO 112, und 20,0 g VE Wasser vermischt. Die Mischung wurde mit getränktem Papiertuch auf eine gereinigte geschliffene Edelstahloberfläche (Größe = 8 200x50x2 mm) aufgetragen. Die daraus entstandenen Beschichtung wurde 10 Minuten lang bei 220°C getrocknet.

**Tabelle 5:**

| Resultat | | | | | | |
|---|---|---|---|---|---|---|
| Formulierung: | Kochtest | Bleistifthärte | 1 h Test Hac Reiniger | 1 h $H_2O$ bei Rt | 1 h Senf | 1 h Backofenreiniger |
| Anwendungsbeispiel 3.1 | | | + | + | + | + |
| Vergleichsbeispiel 3.2 | | | - | + | - | - |
| Vergleichsbeispiel 3.3 | | | - | + | - | - |

Visuelle Beurteilung der Beschichtung nach dem Essigreiniger und Wassertest

(-) = Schicht zerstört bzw. abgelöst
(0) = Schicht vorhanden, aber leicht angegriffen
(+) = Schicht unverändert

**Patentansprüche**

**1.** Verfahren zur Herstellung einer Zusammensetzung enthaltend im Wesentlichen wasserlösliche, tris-silylierte aminofunktionelle, im Wesentlichen alkoxygruppenfreie Siliciumverbindungen, Wasser und gegebenenfalls eine Säure, indem

- mindestens ein tris-silyliertes Aminoalkoxysilan der Formel IX

$$N[ZSi(R^{12})_{\Omega}(OR^1)_{3-\Omega}]_3 \qquad (IX)$$

mit Z unabhängig für einen bivalenten Alkylen-Rest, insbesondere aus der Reihe $-CH_2-$, $-(CH_2)_2-$, $-(CH_2)_3-$, oder $-[CH_2CH(CH_3)CH]-$, $R^{12}$ einem linearen, verzweigten oder cyclischen Alkyl-Rest mit 1 bis 24 C-Atomen entspricht und worin unabhängig $\Omega$ = 0 oder 1 ist und/oder dessen Hydrolyse- und/oder Kondensationsprodukte und gegebenenfalls
- mindestens ein Bis-Aminoalkoxysilan der Formel II

$$(OR^1)_{3-\Delta}(R^{11})_{\Delta}Si - A- Si(R^{11})_{\Delta}(OR^1)_{3-\Delta} \qquad (II)$$

mit A für eine bis-aminofunktionelle Gruppe der Formel III

$$-(CH_2)_i -[NH(CH_2)_f]_gNH[(CH_2)_{f*}NH]_{g*} -(CH_2)_{i*}- \qquad (III)$$

worin i, i*, f, f*, g oder g* gleich oder verschieden sind, mit i und/oder i* = 0 bis 8, f und/oder f* = 1, 2 oder 3, g und/oder g* = 0, 1 oder 2, $R^{11}$ einem linearen, verzweigten oder cyclischen Alkyl-Rest mit 1 bis 24 C-Atomen oder einem Aryl-Rest entspricht, mit $\Delta$ = 0 oder 1 und/oder dessen Hydrolyse- und/oder Kondensationsprodukte und gegebenenfalls
- mindestens ein Aminoalkylalkoxysilan der Formel IV

$$B\text{-}Si(R^3)_x(OR^1)_{3-x} \quad \text{(IV)}$$

mit x = 0 oder 1, wobei $R^3$ einem linearen, verzweigten und/oder cyclischen Alkyl-Rest mit 1 bis 24 C-Atomen und B einer der folgenden aminofunktionellen Gruppen der allgemeinen Formel Va oder Vb entspricht

$$R^{10}{}_{h^*}NH_{(2-h^*)}[(CH_2)_h(NH)]_j\,[(CH_2)_l(NH)]_n\text{-}(CH_2)_k\text{-} \quad \text{(Va)}$$

worin $0 \leq h \leq 6$; h* = 0, 1 oder 2, j = 0, 1 oder 2; $0 \leq l \leq 6$; n = 0, 1 oder 2; $0 \leq k \leq 6$ und $R^{10}$ einem Benzyl-, Aryl-, Vinyl-, Formyl-Rest und/oder einem linearen, verzweigten und/oder cyclischen Alkyl-Rest mit 1 bis 8 C-Atomen entsprechen, und/oder

$$[NH_2(CH_2)_m]_2N(CH_2)_p\text{-} \quad \text{(Vb)}$$

wobei $0 \leq m \leq 6$ und $0 \leq p \leq 6$ sind und/oder dessen Hydrolyse- und/oder Kondensationsprodukte und gegebenenfalls
- mindestens ein Alkylalkoxysilan der allgemeinen Formel VI

$$C\text{-}Si(R^5)_y(OR^1)_{3-y} \quad \text{(VI)}$$

mit y = 0 oder 1, wobei C einem linearen, verzweigten oder cyclischen Alkyl-Rest mit 1 bis 20 C-Atomen, $R^5$ einem linearen, verzweigten oder cyclischen Alkyl-Rest mit 1 bis 24 C Atomen und/oder Aryl-Rest entspricht und/oder dessen Hydrolyse- und/oder Kondensationsprodukte, und gegebenenfalls
- mindestens ein Epoxy- oder Ether-Alkoxysilan der allgemeinen Formel VII

$$D\text{-}Si(R^7)_u(OR^1)_{3-u} \quad \text{(VII),}$$

mit u = 0 oder 1, wobei D einem 3-Glycidoxyalkyl-, 3-Glycidoxypropyl-, Epoxyalkyl-, Epoxycycloalkyl-, Polyalkylglykolalkyl- oder einem Polyalkylglykol-3-propyl-Rest, $R^7$ einem linearen, verzweigten oder cyclischen Alkyl-Rest mit 1 bis 24 C-Atomen oder Aryl-Rest entspricht und/oder dessen Hydrolyse- und/oder Kondensationsprodukte, und gegebenenfalls
- mindestens ein organofunktionelles Alkoxysilan der Formel VIII

$$E\text{-}Si(R^8)_v(OR^1)_{3-v} \quad \text{(VIII),}$$

mit v = 0 oder 1, wobei $R^8$ einem linearen, verzweigten oder cyclischen Alkyl-Rest mit 1 bis 4 C-Atomen, E einem Rest $R^{8*}\text{-}Y_m\text{-}(CH_2)_s\text{-}$, wobei $R^{8*}$ einem mono-, oligo- oder perfluorierten Alkyl-Rest mit 1 bis 9 C-Atomen oder einem mono-, oligo- oder perfluorierten Aryl-Rest, wobei ferner Y einem $CH_2$-, O-, Aryl- oder S-Rest entspricht und m = 0 oder 1 und s = 0 oder 2 sind, oder einem Vinyl-, Allyl-, Isopropenyl-Rest, Mercaptoalkyl-Rest, Sulfanalkyl-Rest, Ureidoalkyl-Rest, einem Acryloxyalkyl-Rest oder einem linearen, verzweigten oder cyclischen Alkoxyrest mit 1 bis 24 C-Atomen, insbesondere mit 1 bis 4 C-Atomen, entsprechen, dessen Hydrolyse- und/oder Kondensationsprodukte, und/oder gegebenenfalls
- eine Mischung mindestens zwei der vorgenannten Alkoxysilane, Hydrolyse- und/oder Kondensationsprodukte;
- und wobei $R^1$ unabhängig voneinander jeweils in den Formeln IX, II, IV, VI, VII und/oder VIII einem linearen, cyclischen und/oder verzweigten Alkyl-Rest mit 1 bis 24 C-Atomen, insbesondere mit 1 bis 4 C-Atomen, entspricht;
- in Gegenwart von Wasser und gegebenenfalls in Gegenwart einer Säure, und gegebenenfalls unter Vorlage und/oder Zugabe von Alkohol und/oder eines Katalysators hydrolysiert werden und der Alkohol im Wesentlichen entfernt wird.

**2.** Verfahren nach Anspruch 1,
**dadurch gekennzeichnet,**

**dass** im Wesentlichen vollständig hydrolysiert wird und, insbesondere zumindest partiell co-kondensiert wird.

3. Verfahren nach einem der Ansprüche 1 oder 2,
**dadurch gekennzeichnet,**
**dass** der pH-Wert während der Hydrolyse unter 12 liegt, insbesondere zwischen 1 bis 12, bevorzugt zwischen 1 bis 9, besonders bevorzugt zwischen 1 bis 6.

4. Verfahren nach einem der Ansprüche 1 bis 3,
**dadurch gekennzeichnet,**
**dass** mindestens ein tris-silyliertes Aminoalkylalkoxysilan der Formel IX und ein Alkylalkoxysilan der allgemeinen Formel VI eingesetzt werden.

5. Verfahren nach einem der Ansprüche 1 bis 4,
**dadurch gekennzeichnet,**
**dass** Wasser zugegeben und ein Alkohol/Wasser-Gemisch entfernt wird bis die Zusammensetzung im Wesentlichen frei von Alkoholen ist.

6. Zusammensetzung erhältlich nach einem der Ansprüche 1 bis 5.

7. Beschichtungen an Substraten oder auf Substratoberflächen, wie metallischen Oberflächen oder von Legierungen, insbesondere auf chromatierten, phosphatierten oder chromitierten metallischen Oberflächen, durch Aushärten einer Zusammensetzung nach Anspruch 6 mit einem Substrat oder auf einem Substrat.

8. Beschichtete oder verfestigte Produkte, die durch Verwendung und insbesondere Aushärtung der Zusammensetzung und/oder Mischungen nach Anspruch 6 mit einem Substrat oder auf einem Substrat erhältlich sind.

9. Verwendung einer Zusammensetzung nach Anspruch 6 in Mischungen mit Silan basierten Zusammensetzungen.

10. Verwendung einer Zusammensetzung nach Anspruch 6 oder einer Mischung nach Anspruch 9 zur Modifizierung und/oder zur Behandlung von Substraten und/oder Substratoberflächen, insbesondere zum Aufbau einer Barriereschicht auf Substraten und/oder Substratoberflächen, zur Erzeugung biozid, fungizid und/oder viruzid wirkender Beschichtungen, als Entformungshilfsmittel, als Haftvermittler, als Primer und/oder zur Gesteinsverfestigung sowie als Komponente bzw. Bestandteil für bzw. in einem Flüssiglack oder Pulverlack.

11. Verwendung nach Anspruch 10, zur Herstellung mindestens einer zumindest partiellen Schicht, insbesondere einer ausgehärteten Schicht, auf einem organischen und/oder anorganischen Substrat und/oder organischanorganischem Kompositmaterial zum Schutz vor Korrosion und/oder UV-Strahlung, basierend auf einer Zusammensetzung nach Anspruch 6 oder einer Mischung nach Anspruch 9 als Sol-Gel-System und/oder basierend auf einer im Wesentlichen Sol-Gel freien Zusammensetzung nach Anspruch 6 oder einer Sol-Gel freien Mischung nach Anspruch 9.

## Claims

1. Process for preparing a composition comprising essentially water-soluble, tris-silylated amino-functional, essentially alkoxy group-free silicon compounds, water and optionally an acid, by hydrolysing

- at least one tris-silylated aminoalkoxysilane of the formula IX

$$N[ZSi(R^{12})_{\Omega}(OR^1)_{3-\Omega}]_3 \qquad (IX)$$

where Z is independently a bivalent alkylene radical, especially from the group of $-CH_2-$,$-(CH_2)_2-$, $-(CH_2)_3-$, or $-[CH_2CH(CH_3)CH]-$, $R^{12}$ is a linear, branched or cyclic alkyl radical having 1 to 24 carbon atoms, and in which $\Omega$ is independently 0 or 1, and/or the hydrolysis and/or condensation products thereof, and optionally
- at least one bisaminoalkoxysilane of the formula II

$$(OR^1)_{3-\Delta}(R^{11})_{\Delta}Si - A - Si(R^{11})_{\Delta}(OR^1)_{3-\Delta} \qquad (II)$$

where A is a bisamino-functional group of the formula III

$$-(CH_2)_i -[NH(CH_2)_f]_g NH[(CH_2)_{f^*}NH]_{g^*}-(CH_2)_{i^*}- \qquad (III)$$

in which i, i*, f, f*, g and g* are the same or different, where i and/or i* = 0 to 8, f and/or f* = 1, 2 or 3, g and/or g* = 0, 1 or 2, $R^{11}$ is a linear, branched or cyclic alkyl radical having 1 to 24 carbon atoms or an aryl radical, where $\Delta$ = 0 or 1, and/or the hydrolysis and/or condensation products thereof, and optionally
- at least one aminoalkylalkoxysilane of the formula IV

$$B\text{-}Si(R^3)_x(OR^1)_{3-x} \qquad (IV)$$

where x = 0 or 1, where $R^3$ is a linear, branched and/or cyclic alkyl radical having 1 to 24 carbon atoms and B is one of the following amino-functional groups of the general formula Va or Vb

$$R^{10}{}_{h^*}NH_{(2-h^*)}\ [(CH_2)_h(NH)]_j\ [(CH_2)_l(NH)]_n\text{-}(CH_2)_k\text{-} \qquad (Va)$$

in which $0 \leq h \leq 6$; h* = 0, 1 or 2, j = 0, 1 or 2; $0 \leq l \leq 6$; n = 0, 1 or 2; $0 \leq k \leq 6$ and $R^{10}$ is a benzyl, aryl, vinyl, formyl radical and/or a linear, branched and/or cyclic alkyl radical having 1 to 8 carbon atoms, and/or

$$[NH_2(CH_2)_m]_2N(CH_2)_p\ \text{-} \qquad (Vb)$$

where $0 \leq m \leq 6$ and $0 \leq p \leq 6$ and/or the hydrolysis and/or condensation products thereof, and optionally
- at least one alkylalkoxysilane of the general formula VI

$$C\text{-}Si(R^5)_y\ (OR^1)_{3-y} \qquad (VI)$$

where y = 0 or 1, where C is a linear, branched or cyclic alkyl radical having 1 to 20 carbon atoms, $R^5$ is a linear, branched or cyclic alkyl radical having 1 to 24 carbon atoms and/or an aryl radical and/or the hydrolysis and/or condensation products thereof, and optionally
- at least one epoxy or ether alkoxysilane of the general formula VII

$$D\text{-}Si(R^7)_u(OR^1)_{3-u} \qquad (VII)$$

where u = 0 or 1, where D is a 3-glycidoxyalkyl, 3-glycidoxypropyl, epoxyalkyl, epoxycycloalkyl, polyalkylglycolalkyl or a polyalkylglycol-3-propyl radical, $R^7$ is a linear, branched or cyclic alkyl radical having 1 to 24 carbon atoms or an aryl radical, and/or the hydrolysis and/or condensation products thereof, and optionally

- at least one organofunctional alkoxysilane of the formula VIII

$$E\text{-}Si(R^8)_v(OR^1)_{3-v} \qquad (VIII)$$

where v = 0 or 1, where $R^8$ is a linear, branched or cyclic alkyl radical having 1 to 4 carbon atoms, E is an $R^{8*}\text{-}Y_m\text{-}(CH_2)_s$- radical where $R^{8*}$ is a mono-, oligo- or perfluorinated alkyl radical having 1 to 9 carbon atoms or a mono-, oligo- or perfluorinated aryl radical, where Y is additionally a $CH_2$-, O-, aryl or S radical and m = 0 or 1 and s = 0 or 2, or a vinyl, allyl, isopropenyl radical, mercaptoalkyl radical, sulphanealkyl radical, ureidoalkyl radical, an acryloyloxyalkyl radical or a linear, branched or cyclic alkoxy radical having 1 to 24 carbon atoms, especially having 1 to 4 carbon atoms, the hydrolysis and/or condensation products thereof, and/or optionally
- a mixture of at least two of the abovementioned alkoxysilanes or hydrolysis and/or condensation products thereof;
- and where R1, in each case independently, in the Formulae IX, II, IV, VI, VII and/or VIII is a linear, cyclic and/or branched alkyl radical having 1 to 24 carbon atoms, especially having 1 to 4 carbon atoms;
- in the presence of water and optionally in the presence of an acid, and optionally with initial charging and/or addition of alcohol and/or of a catalyst, and essentially removing the alcohol.

**2.** Process according to Claim 1,
**characterized in that**
essentially complete hydrolysis is effected, and especially at least partial cocondensation.

3. Process according to either of Claims 1 and 2,
**characterized in that**
the pH during the hydrolysis is below 12, especially in the range from 1 to 12, preferably in the range from 1 to 9, more preferably in the range from 1 to 6.

4. Process according to any one of Claims 1 to 3,
**characterized in that**
at least one tris-silylated aminoalkylalkoxysilane of the formula IX and an alkylalkoxysilane of the general formula VI are used.

5. Process according to any one of Claims 1 to 4,
**characterized in that**
water is added and an alcohol/water mixture is removed until the composition is essentially free of alcohols.

6. Composition obtainable according to any one of Claims 1 to 5.

7. Coatings on substrates or on substrate surfaces, such as metallic surfaces or of alloys, especially on chromated, phosphated or chromited metallic surfaces, by curing a composition according to Claim 6 with a substrate or on a substrate.

8. Coated or consolidated products which are obtainable by use and especially curing of the composition and/or mixtures according to Claim 6 with a substrate or on a substrate.

9. Use of a composition according to Claim 6 in mixtures with silane-based compositions.

10. Use of a composition according to Claim 6 or of a mixture according to Claim 9 for modification and/or for treatment of substrates and/or substrate surfaces, especially for formation of a barrier layer on substrates and/or substrate surfaces, for production of biocidal, fungicidal and/or virucidal coatings, as a demoulding aid, as an adhesion promoter, as a primer and/or for rock consolidation, and as a component or constituent for or in a liquid coating material or powder coating material.

11. Use according to Claim 10 for production of at least one at least partial layer, especially of a cured layer, on an organic and/or inorganic substrate and/or organic/inorganic composite material for protection from corrosion and/or UV radiation, based on a composition according to Claim 6 or a mixture according to Claim 9 as a sol-gel system and/or based on an essentially sol-gel-free composition according to Claim 6 or a sol-gel-free mixture according to Claim 9.

## Revendications

1. Procédé de fabrication d'une composition contenant principalement des composés de silicium solubles dans l'eau, trisilylés aminofonctionels, essentiellement exempts de groupes alcoxy, de l'eau et éventuellement un acide, selon lequel

- au moins un aminoalcoxysilane tris-silylé de formule IX

$$N[ZSi(R^{12})_{\Omega}(OR^1)_{3-\Omega}]_3 \qquad (IX)$$

dans laquelle les Z correspondent indépendamment à un radical alkylène bivalent, notamment de la série constituée par $-CH_2-$, $-(CH2)_2-$, $-(CH_2)_3-$ ou-$[CH_2CH(CH_3)CH]-$, $R^{12}$ correspond à un radical alkyle linéaire, ramifié ou cyclique de 1 à 24 atomes C, et, indépendamment, $\Omega$ = 0 ou 1, et/ou ses produits d'hydrolyse et/ou de condensation, et éventuellement
- au moins un bis-aminoalcoxysilane de formule II

$$(OR^1)_{3-\Delta}(R^{11})_{\Delta}Si\text{-}A\text{-}Si(R^{11})_{\Delta}(OR^1)_{3-\Delta} \qquad (II)$$

dans laquelle A représente un groupe bis-aminofonctionnel de formule III

$$-(CH_2)_i-[NH(CH_2)_f]_gNH[(CH_2)_{f*}NH]_{g*}-(CH_2)_{i*}- \qquad (III)$$

dans laquelle i, i*, f, f*, g ou g* sont identiques ou différents, avec i et/ou i* = 0 à 8, f et/ou f* = 1, 2 ou 3, g et/ou g* = 0, 1 ou 2, $R^{11}$ correspond à un radical alkyle linéaire, ramifié ou cyclique de 1 à 24 atomes C ou à un radical aryle, avec $\Delta$ = 0 et/ou 1, et/ou ses produits d'hydrolyse et/ou de condensation, et éventuellement
- au moins un aminoalkylalcoxysilane de formule IV

$$B-Si(R^3)_x(OR^1)_{3-x} \qquad (IV)$$

dans laquelle x = 0 ou 1, $R^3$ correspond à un radical alkyle linéaire, ramifié et/ou cyclique de 1 à 24 atomes C, et B correspond à un des groupes aminofonctionnels suivants de formule générale Va ou Vb

$$R^{10}_{h*}NH_{(2-h*)}[(CH_2)_h(NH)]_j[(CH_2)_l(NH)]_n-(CH_2)_k- \qquad (Va)$$

dans laquelle $0 \leq h \leq 6$ ; h* = 0, 1 ou 2, j = 0, 1 ou 2 ; $0 \leq l \leq 6$ ; n = 0, 1 ou 2 ; $0 \leq k \leq 6$, et $R^{10}$ correspond à un radical benzyle, aryle, vinyle, formyle et/ou à un radical alkyle linéaire, ramifié et/ou cyclique de 1 à 8 atomes C, et/ou

$$[NH_2(CH_2)_m]_2N(CH_2)_p- \qquad (Vb)$$

dans laquelle $0 \leq m \leq 6$ et $0 \leq p \leq 6$, et/ou ses produits d'hydrolyse et/ou de condensation, et éventuellement
- au moins un alkylalcoxysilane de formule générale VI

$$C-Si(R^5)_y(OR^1)_{3-y} \qquad (VI)$$

dans laquelle y = 0 ou 1, C correspond à un radical alkyle linéaire, ramifié ou cyclique de 1 à 20 atomes C, $R^5$ correspond à un radical alkyle linéaire, ramifié ou cyclique de 1 à 24 atomes C et/ou un radical aryle, et/ou ses produits d'hydrolyse et/ou de condensation, et éventuellement,
- au moins un époxy- ou éther-alcoxysilane de formule générale VII

$$D-Si(R^7)_u(OR^1)_{3-u} \qquad (VII),$$

dans laquelle u = 0 ou 1, D correspond à un radical 3-glycidoxyalkyle, 3-glycidoxypropyle, époxyalkyle, époxycycloalkyle, polyalkylglycolalkyle ou polyalkylglycol-3-propyle, $R^7$ correspond à un radical alkyle linéaire, ramifié ou cyclique de 1 à 24 atomes C ou un radical aryle, et/ou ses produits d'hydrolyse et/ou de condensation, et éventuellement
- au moins un alcoxysilane organofonctionnel de formule VIII

$$E-Si(R^8)_v(OR^1)_{3-v} \qquad (VIII),$$

dans laquelle v = 0 ou 1, $R^8$ correspond à un radical alkyle linéaire, ramifié ou cyclique de 1 à 4 atomes C, E correspond à un radical $R^{8*}-Y_m-(CH_2)_s-$, $R^{8*}$ correspondant à un radical alkyle mono-, oligo- ou perfluoré de 1 à 9 atomes C ou à un radical aryle mono-, oligo- ou perfluoré, Y correspondant à un radical $CH_2$, O, aryle ou S, et m = 0 ou 1 et s = 0 ou 2, ou un radical vinyle, allyle, isopropényle, un radical mercaptoalkyle, un radical sulfanalkyle, un radical uréidoalkyle, un radical acryloxyalkyle ou un radical alcoxy linéaire, ramifié ou cyclique de 1 à 24 atomes C, notamment de 1 à 4 atomes C, ses produits d'hydrolyse et/ou de condensation, et/ou éventuellement
- un mélange d'au moins deux des alcoxysilanes, produits d'hydrolyse et/ou de condensation susmentionnés ;
- et les $R^1$ correspondant à chaque fois indépendamment les uns des autres dans les formules IX, II, IV, VI, VII et/ou VIII à un radical alkyle linéaire, cyclique et/ou ramifié de 1 à 24 atomes C, notamment de 1 à 4 atomes C ;
- sont hydrolysés en présence d'eau et éventuellement en présence d'un acide et éventuellement avec chargement initial et/ou ajout d'un alcool et/ou d'un catalyseur, et l'alcool est essentiellement éliminé.

2. Procédé selon la revendication 1, **caractérisé en ce qu'**ils sont hydrolysés essentiellement en totalité, et notamment au moins partiellement co-condensés.

3. Procédé selon l'une quelconque des revendications 1 ou 2, **caractérisé en ce que** le pH pendant l'hydrolyse est inférieur à 12, notamment compris entre 1 et 12, de préférence entre 1 et 9, de manière particulièrement préférée

entre 1 et 6.

4. Procédé selon l'une quelconque des revendications 1 à 3, **caractérisé en ce qu'**au moins un aminoalkylalcoxysilane tris-silylé de formule IX et un alkylalcoxysilane de formule générale VI sont utilisés.

5. Procédé selon l'une quelconque des revendications 1 à 4, **caractérisé en ce que** de l'eau est ajoutée et un mélange alcool/eau est éliminé jusqu'à ce que la composition soit essentiellement exempte d'alcools.

6. Composition pouvant être obtenue selon l'une quelconque des revendications 1 à 5.

7. Revêtements sur des substrats ou sur des surfaces de substrats, telles que des surfaces métalliques ou d'alliages, notamment sur des surfaces métalliques chromatées, phosphatées ou chromitées, par durcissement d'une composition selon la revendication 6 avec un substrat ou sur un substrat.

8. Produits revêtus ou solidifiés, qui peuvent être obtenus par utilisation et notamment durcissement de la composition et/ou de mélanges selon la revendication 6 avec un substrat ou sur un substrat.

9. Utilisation d'une composition selon la revendication 6 dans des mélanges avec des compositions à base de silane.

10. Utilisation d'une composition selon la revendication 6 ou d'un mélange selon la revendication 9 pour la modification et/ou le traitement de substrats et/ou de surfaces de substrats, notamment pour la formation d'une couche de barrière sur des substrats et/ou des surfaces de substrats, pour la formation de revêtements à effet biocide, fongicide et/ou virucide, en tant qu'adjuvant de démoulage, en tant que promoteur d'adhésion, en tant que couche primaire et/ou pour la solidification de pierres, ainsi qu'en tant que composant ou constituant pour ou dans un vernis liquide ou un vernis en poudre.

11. Utilisation selon la revendication 10, pour la fabrication d'au moins une couche au moins partielle, notamment d'une couche durcie, sur un substrat organique et/ou inorganique et/ou un matériau composite organique-inorganique pour la protection contre la corrosion et/ou les rayonnements UV, à base d'une composition selon la revendication 6 ou d'un mélange selon la revendication 9 en tant que système sol-gel et/ou à base d'une composition selon la revendication 6 essentiellement sans sol-gel ou d'un mélange selon la revendication 9 sans sol-gel.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0590270 A2
- DE 10335178 A1
- US 5051129 A
- EP 0716128 A1
- EP 1031593 A2
- WO 0039177 A2
- US 6955728 B1
- DE 1008703
- WO 2005014741 A1